# EUROPEAN PATENT SPECIFICATION

(11) **EP 3 303 151 B1**
(45) Date of publication and mention of the grant of the patent: **31.07.2019**
(21) Application number: 16725082.8
(22) Date of filing: 19.05.2016
(51) Int. Cl.: B65B 31/02, B65B 7/16, B65B 7/28, B65B 3/02, B65B 5/02, B65B 31/04, B65B 41/04, B65B 41/16, B29L 31/00, B29C 65/18, B65B 43/52, B65B 61/06, B29C 65/74, B29C 65/00

(54) **APPARATUS AND PROCESS FOR PACKAGING A PRODUCT**
VORRICHTUNG UND VERFAHREN ZUM VERPACKEN EINES PRODUKTS
APPAREIL ET PROCÉDÉ POUR LE CONDITIONNEMENT D'UN PRODUIT

(30) Priority: 29.05.2015 EP 15169930
(43) Date of publication of application: 11.04.2018
(73) Proprietor: Cryovac, LLC, Charlotte, NC 28208 (US)
(72) Inventor: CAPITANI, Stefano, I-20152 Milano (IT)
(74) Representative: Sutto, Luca
(86) International application number: PCT/EP2016/061211
(87) International publication number: WO 2016/193006

(56) References cited:
- EP-A1- 2 374 730
- EP-A1- 2 459 448
- EP-A1- 2 729 373
- EP-A2- 1 842 776
- WO-A1-2014/056806
- WO-A1-2014/180823
- US-A- 3 347 011
- US-A- 5 155 974
- US-A- 5 711 978
- US-A1- 2012 201 481
- US-B1- 6 912 828

## Description

### Technical field

The present invention relates to an apparatus and to a process for packaging a product. In accordance with other aspects, the invention relates to an apparatus and process for packaging a product under a controlled atmosphere.

### Background art

Containers are commonly used for the packaging of food and for a wide variety of other items wherein a lid is bonded to the container e.g. by the application of heat. The containers and lids can be made of a number of materials, for example plastic, metal, or combinations thereof, whereas the lid is typically supplied in form of a continuous film and subsequently cut into a suitable shape either before or after bonding. In some examples, a plastic lid is pre-cut into a suitable shape and subsequently heat bonded onto a plastic tray.

In order to package products, in particular food products, vacuum packaging has been developed and refined in the past. Vacuum skin packaging is basically a thermoforming process. In particular, the product is typically placed on a rigid or semi-rigid support (such as a tray, a bowl, or a cup). The support with the product placed thereon is put in a vacuum chamber, where a film of thermoplastic material, held by a local vacuum in a position above the product placed on the support, is heated to make it more yielding. The space between the support and the film is evacuated. The film is then sealed at the perimeter of the tray to fix its position relative to the tray and the local vacuum above the film is shut off, releasing the film. When the vacuum inside the chamber is decreased, the vacuum inside the tray causes the film to drape down all around the product and seal to the surface of the support not covered by the product, thus forming a tight skin around the product and on the support. In the known apparatus vacuum is formed by vacuum pumps withdrawing air via channels connected to the vacuum chamber: although the tray and the film portion located in the vacuum chamber are held in place by appropriate holders the suction caused by vacuum may cause gas streams determining undesired dislocation of the trays and/or of film portions which in the end may compromise quality of the heat bonding. Also, gas streams caused by vacuum formation in the vacuum chamber may cause uncontrolled deformation of film portions and/or of the tray flange with consequent possible reduction of the bonding quality.

Another packaging methodology is referred to as tray lidding. In tray lidding processes, a lid is positioned on a film holder above a tray: then either normal atmosphere is left in the tray or - more typically when it comes to packaging food products - injection of a gas of controlled composition takes place. Afterwards the lid is heat bonded to the tray: in detail, a sealing tool is configured to act upon the portions of the film extending beyond the film holder in order to seal the film to the tray. The portions of the film extending beyond the film holder are prone to deformation due to a number of packaging process related factors: heat emitted from the sealing tool or other components, turbulence of gas or air created upon evacuation and/or upon creation of the inert atmosphere, mechanical movement of components of the packaging tool, mechanical resistance and/or rigidity of the material at certain process related temperatures, etc.

When such deformation occurs, the quality of the seal can be compromised, possibly leading to a seal of mediocre quality or a defective seal. Also, gas flows during the packaging process may cause dislocation from proper position and/or deformation of the tray flange, thus leading to a sealing between film and tray flange.

Furthermore, in applications where a controlled atmosphere has to be created in the package, it may be problematic to efficiently and quickly evacuate air and generate the proper modified atmosphere. A solution which has been proposed in the past in order to solve this problem is described in EP 2641835.This reference shows a packaging machine wherein a tool system hosts a tray. Gas supply apertures are positioned in a tool of the tool system and are configured to generate a gas stream which is substantially parallel to the top flange of the tray. The gas supply apertures and the gas evacuation apertures are positioned at respective opposed ends of a common side of the tool: this particular relative position of the gas injection and of the gas evacuation apertures is claimed to improve formation of a contolled atmosphere in the tray. WO2014/056806 and EP2729373 show packaging apparatus with injection of air via vertical channels located at side regions of the tray. EP1842776 shows a packaging apparatus with injection of air above the tray flange at side locations of the tray.

Therefore, it is an object of the invention conceiving a process and an apparatus, which can efficiently and accurately allow to position a film and/or a tray in a packaging process.

In particular, it is an object of the invention providing an apparatus and a process able to avoid or at least reduce film and/or of a tray misplacing during a packaging process.

Additionally, it is an ancillary object of the invention a process and an apparatus suitable for packaging of products under a controlled atmosphere and capable of efficient gas injection and/or gas removal and therefore efficient control of gas composition inside a package during the packaging process.

Finally, it is a further auxiliary object providing a process and an apparatus configured such as to avoid uncontrolled deformation of the film and/or tray during a packaging process.

### Summary of the invention

One or more of the objects specified above are substantially achieved by a process and by an apparatus according to any one of the appended claims.

### Brief description of the drawings

The present invention will become clearer by reading the following detailed description, given by way of example and not of limitation, to be read with reference to the accompanying drawings, wherein:
FIG. 1 is a schematic side view layout of a first embodiment of an apparatus according to aspects of the invention.
FIG. 1A is a schematic side view layout of a second embodiment of an apparatus according to aspects of the invention.

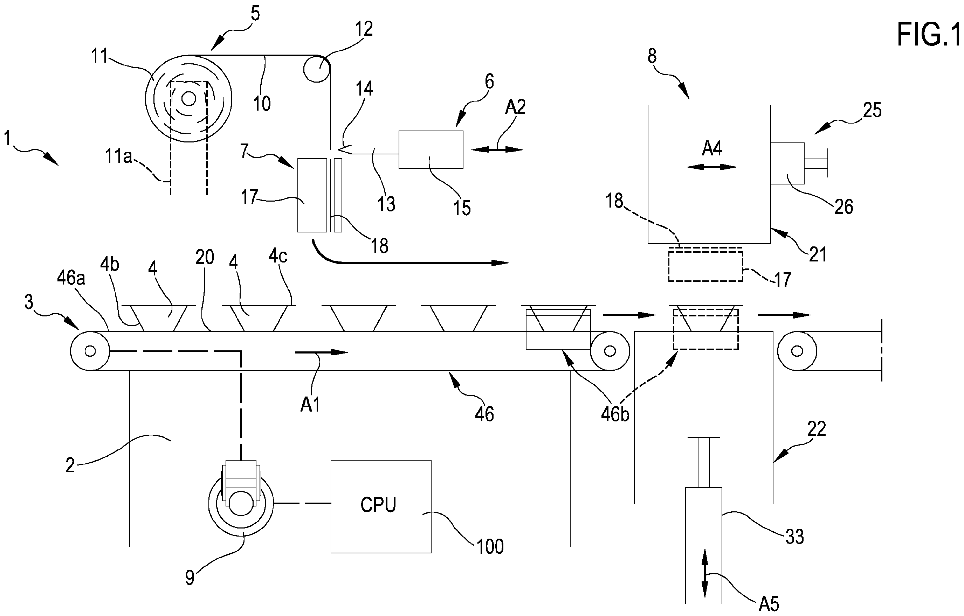

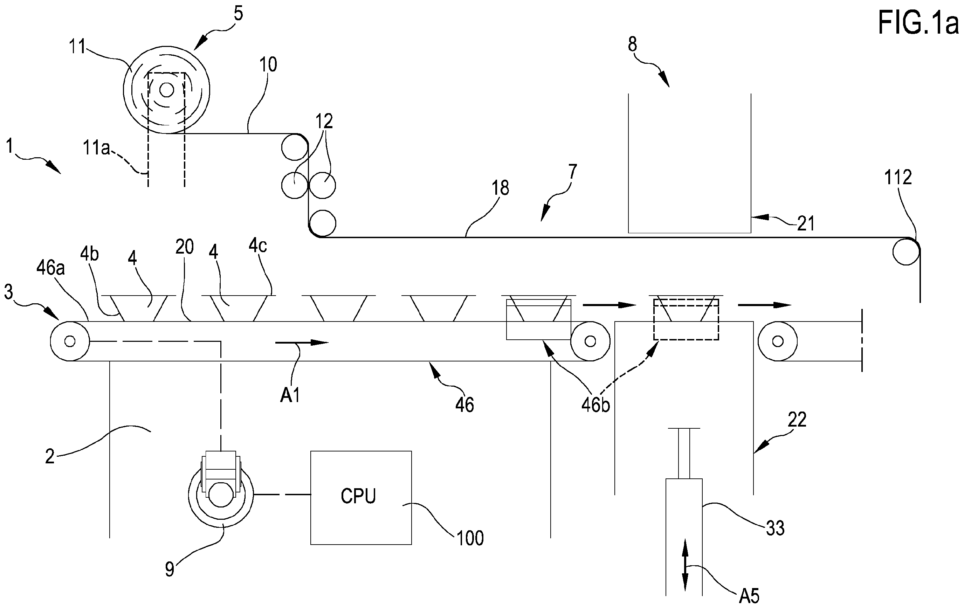

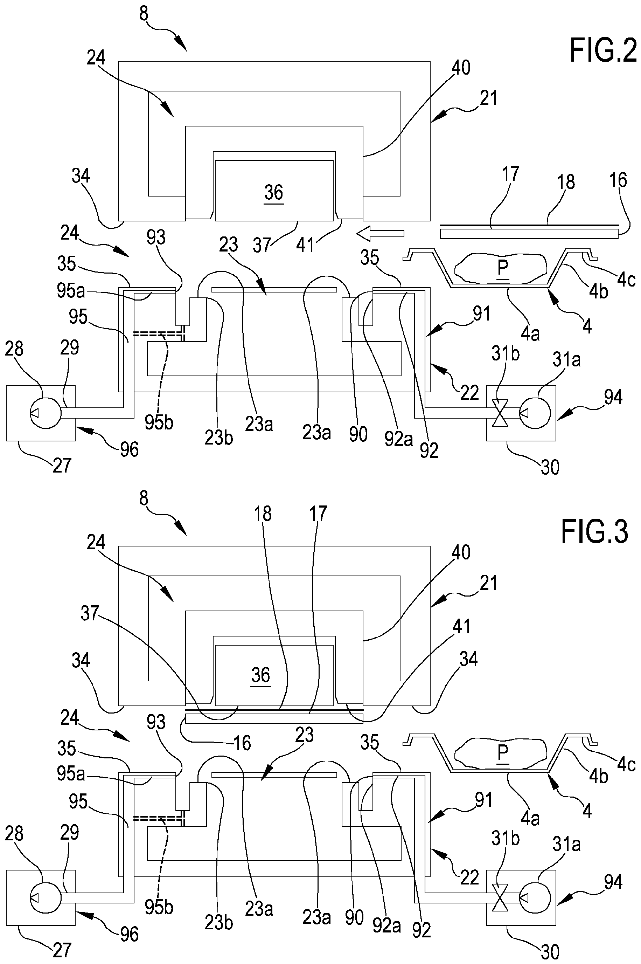

FIGs. 2-13 are schematic side views relating to a packaging assembly of the apparatus of figure 1, according to further aspects of the invention. In these figures, consecutive phases of a packaging process operated by the apparatus of the first embodiment are shown. The apparatus and process according to these figures relate to a case where a continuous film is severed into discrete film sheets of appropriate shape and size before each film sheet is transported inside the packaging assembly and positioned above the respective tray. The apparatus and process shown in these figures are intended for tray lidding with formation of a controlled atmosphere inside the package. However, it is not excluded that the apparatus may also be used to form a skin packaging.

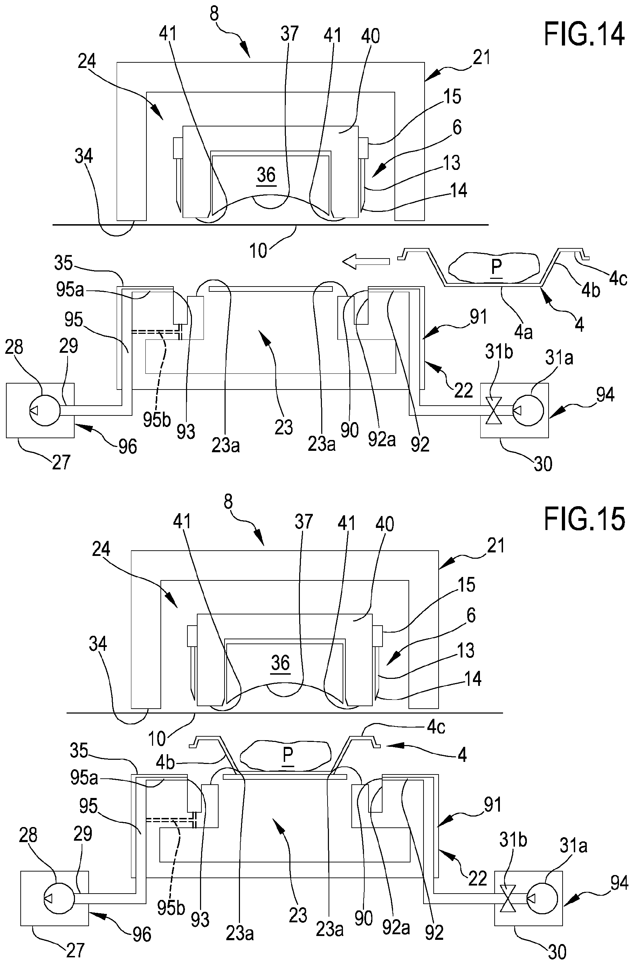

FIGs. 14-22 are schematic side views relating to a packaging assembly of the apparatus of figure 1A, according to other aspects of the invention. In these figures, consecutive phases of a packaging process operated by the apparatus of the second embodiment are shown. The apparatus and process according to these figures relate to a case where a continuous film is unrolled and moved into the packaging assembly and above one or more trays. Once the desired film portion is properly positioned in the packaging assembly, the continuous film is severed into discrete film sheets of appropriate shape and size which are tightly fixed to the respective tray. The severing may take place before, during or after the film is fixed to the tray or trays. The apparatus and process shown in these figures are intended for tray lidding with formation of a controlled atmosphere inside the package. However, it is not excluded that the apparatus may also be used to form a skin packaging.
FIG. 23 is a schematic view taken from the bottom of a tray located in the packaging assembly of any one of above embodiments. This figure shows a tray, a film sheet overlapping the tray, and the overlying upper tool of the packaging assembly.
FIG. 24 is a cross section of a packaging assembly which may be used in the first and second embodiment of the apparatus. The packaging assembly is shown in correspondence of a second operation condition where it forms a packaging chamber. The cross section is taken along a plane (represented with trace XXIV-XXIV) passing through corners of a tray seat located inside the packaging assembly where a tray is positioned during the packaging process.
FIG. 25 is a cross section of the packaging assembly of figure 24 taken along a plane (represented with trace XXV-XXV in figure 23) angularly shifted of 45° with respect to the section plane of figure and therefore not passing through said corners.
FIG. 26 shows in perspective a detail of the lower tool of the packaging assembly according to a variant of the invention which may be used in the first and second embodiment of the apparatus. According to this variant the lower tool includes a plurality of seats for receiving a corresponding plurality of trays.
Figures 27A and 28 represent a further detail concerning the first apertures used for injection (and/or withdrawing) gas from the packaging chamber, according to aspects of the invention which may be used in the first and second embodiment of the apparatus.
Figure 27B shows a variant of the particular shown in figure 27A.
Figure 29 shows a portion of figure 26 and emphasizes the direction of the injected gas flow streams during gas: as shown in this figure the first apertures are present on two adjacent corner regions of a seat mouth and second apertures used for evacuating gas are located on the side of the seat mouth opposite to said two adjacent corner regions.

### Definitions and conventions

In the present detailed description corresponding parts shown in the various figures are indicated with the same reference numerals through the figures. It is further noted that the figures are not to scale and the parts and components shown therein are schematic representations.

In the following description and claims the apparatus and process refer to packaging of a product inside a tray. The product may be a food product or other product. As used herein, tray 4 denotes a container of the type having a base wall 4a, a side wall 4b, and a flange which is a top flange 4c radially emerging from the side wall 4b. The tray 4 top flange 4c may have polygonal, in particular rectangular, shape. Note that with polygonal or rectangular shape it is intended that the overall appearance of the outer peripheral edge of the top flange is polygonal or rectangular, with corner regions which may be rounded. Trays may be manufactured by thermoforming or injection molding. In certain applications of the invention, the apparatus and process may also operate with trays 4 having a side wall with height sensibly reduced with respect to the radial size of the tray, such that the tray takes the shape of a substantially flat support with a slight central depression on the top surface thereof: for example the depression may be configured to receive laminar products such as for example slices of chees, meat, ham etc.. The side wall may also be substantially absent such that the tray degenerates in a support of flat or plate like conformation whereby the tray flange 4c is defined by a tray peripheral border.

### The trays

The trays 4 described and claimed herein may be made of a single layer or, preferably, of a multi-layer polymeric material.

In case of a single layer material, suitable polymers include, for example, polystyrene, polypropylene, polyesters, high density polyethylene, poly(lactic acid), PVC, and the like, either foamed or solid.

Preferably the tray 4 is provided with gas barrier properties. As used herein such term refers to a film or sheet of material which has an oxygen transmission rate of less than 200 cm³/m²·day·atm, less than 150 cm³/ m²·day·atm, less than 100 cm³/ m²·day·atm as measured according to ASTM D-3985 at 23°C and 0% relative humidity. Suitable materials for gas barrier monolayer thermoplastic trays 4 are, for example, polyesters, polyamides and the like.

In case the tray 4 is made of a multi-layer material, suitable polymers are, for example, ethylene homo- and co-polymers, propylene homo- and co-polymers, polyamides, polystyrene, polyesters, poly(lactic acid), PVC and the like. Part of the multi-layer material can be solid and part can be foamed.

For example, the tray 4 may comprise at least one layer of a foamed polymeric material chosen from the group consisting of polystyrene, polypropylene, polyesters and the like.

The multi-layer material may be produced either by co-extrusion of all the layers using co-extrusion techniques or by glue- or heat-lamination of, for example, a rigid foamed or solid substrate with a thin film, usually called "liner".

The thin film may be laminated either on the side of the tray 4 in contact with the product P or on the side facing away from the product P or on both sides. In the latter case the films laminated on the two sides of the tray 4 may be the same or different. A layer of an oxygen barrier material, for example (ethylene-co-vinyl alcohol) copolymer, is optionally present to increase the shelf-life of the packaged product P.

Gas barrier polymers that may be employed for the gas barrier layer are PVDC, EVOH, polyamides, polyesters and blends thereof. The thickness of the gas barrier layer will be set in order to provide the tray with an oxygen transmission rate suitable for the specific packaged product.

The tray may also comprise a heat sealable layer. Generally, the heat-sealable layer will be selected among the polyolefins, such as ethylene homo- or co-polymers, propylene homo- or co-polymers, ethylene/vinyl acetate copolymers, ionomers, and the homo- and co-polyesters, e.g. PETG, a glycol-modified polyethylene terephthalate.

Additional layers, such as adhesive layers, to better adhere the gas-barrier layer to the adjacent layers, may be present in the gas barrier material for the tray and are preferably present depending in particular on the specific resins used for the gas barrier layer.

In case of a multilayer material used to form the tray 4, part of this structure may be foamed and part may be unfoamed. For example, the tray 4 may comprise (from the outermost layer to the innermost food-contact layer) one or more structural layers, typically of a material such as foam polystyrene, foam polyester or foam polypropylene, or a cast sheet of e.g. polypropylene, polystyrene, poly(vinyl chloride), polyester or cardboard; a gas barrier layer and a heat-sealable layer.

The tray 4 may be obtained from a sheet of foamed polymeric material having a film comprising at least one oxygen barrier layer and at least one surface sealing layer laminated onto the side facing the packaged product, so that the surface sealing layer of the film is the food contact layer the tray. A second film, either barrier or non-barrier, may be laminated on the outer surface of the tray.

Specific tray formulations are used for food products that require heating in a conventional or microwave oven before consumption. The surface of the container in contact with the product, i.e. the surface involved in the formation of the seal with the lidding film, comprises a polyester resin. For example, the container can be made of a cardboard coated with a polyester resin or it can be integrally made of a polyester resin. Examples of suitable containers for the package of the invention are CPET, APET or APET/CPET containers. Such containers can be either foamed or not foamed.

Trays 4 used in tray lidding or skin packaging applications containing foamed parts, have a total thickness lower than 8 mm, and, for example, may be comprised between 0.5 mm and 7.0 mm, more frequently between 1.0 mm and 6.0 mm.

In case of a rigid tray not containing foamed parts, the total thickness of the single-layer or multi-layer thermoplastic material is preferably less than 2 mm, and, for example, may be comprised between 0.1 mm and 1.2 mm, more frequently between 0.2 mm and 1.0 mm.

### The film or film material

The film or film material described herein may be applied to the tray 4 to form a lid on the tray (e.g. for MAP - modified atmosphere packaging) or a skin-like cover in contact with the tray and product, and matching the contour of the product.

The film for skin packaging applications may be made of a flexible multi-layer material comprising at least a first outer heat-sealable layer, an optional gas barrier layer and a second outer heat-resistant layer. The outer heat-sealable layer may comprise a polymer capable of welding to the inner surface of the supports carrying the products to be packaged, for example, ethylene homo- or co-polymers, like LDPE, ethylene/alpha-olefin copolymers, ethylene/acrylic acid copolymers, ethylene/methacrylic acid copolymers, and ethylene/vinyl acetate copolymers, ionomers, co-polyesters (e.g. PETG).

The optional gas barrier layer preferably comprises oxygen impermeable resins like PVDC, EVOH, polyamides and blends of EVOH and polyamides. The outer heat-resistant layer may be made of ethylene homo- or copolymers, ethylene/cyclic-olefin copolymers, such as ethylene or norbornene copolymers, propylene homo- or co-polymers, ionomers, (co)polyesters, (co)polyamides.

The film may also comprise other layers such as adhesive layers or bulk layers to increase the thickness of the film and improve its properties regarding resistance and deep drawing. In particular, ionomers, ethylene/vinyl acetate copolymers, polyamides and polyesters are used in bulk layers. In all layers of the film, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents and the like additives known to those skilled in the art of packaging films.

One or more layers of the film can be cross- linked to improve the strength of the film and/or its heat resistance. Cross-linking may be achieved by using chemical additives or by subjecting the film layers to an energetic radiation treatment.

The films for skin packaging are typically manufactured in order to show low shrink when heated during the packaging cycle. Those films usually shrink less than 15% at 160°C, more frequently lower than 10%, even more frequently lower than 8% in both the longitudinal and transversal direction (ASTM D2732). The films usually have a thickness comprised between 20 microns and 200 microns, more frequently between 40 and 180 microns, and even more frequently between 50 microns and 150 microns.

The skin packages are usually "easy-to-open", i.e. they are easily openable by manually pulling apart the two webs, normally starting from a point like a corner of the package where the upper web has purposely not been sealed to the support. To achieve this feature, either the film or the tray can be provided with a suitable composition, allowing easy opening of the package as known in the art. Typically, the sealant composition and/or the composition of the adjacent layer of the tray and/or the film are adjusted in order to achieve the easy opening feature.

Various mechanisms can occur while opening an easy-to-open package.

In the first one ("peelable easy opening"), the package is opened by separating the film and the tray at the seal interface.

In the second mechanism ("adhesive failure") the opening of the package is achieved through an initial breakage through the thickness of one of the sealing layers followed by delamination of this layer from the underlying support or film.

The third system is based on the "cohesive failure" mechanism. The easy opening feature is achieved by internal rupture of a seal layer that, during opening of the package, breaks along a plane parallel to the layer itself.

Specific blends are known in the art to obtain such opening mechanisms, ensure the peeling of the film from the tray surface, such as those described in EP1084186.

On the other hand, in case the film 10a is used for creating a lid on the tray 4, the film material may be obtained by co-extrusion or lamination processes. Lid films may have a symmetrical or asymmetrical structure and can be of a single layer or multilayer type.

The multilayer films have at least 2, more frequently at least 5, and even more frequently at least 7 layers.

The total thickness of the film may vary from 3 to 100 micron, more frequently from 5 to 50 micron, even more frequently from 10 to 30 micron. The films may optionally be cross-linked. Cross-linking may be carried out by irradiation with high energy electrons at a suitable dosage level as known in the art. The lid films described above may be heat shrinkable or heat-set. The heat shrinkable films typically show a free shrink value measured at 120°C according to ASTM D2732 in the range of from 2 to 80%, more frequently from 5 to 60%, even more frequently from 10 to 40% in both the longitudinal and the transverse direction. The heat-set films usually have free shrink values lower than 10% at 120°C, preferably lower than 5% in both the longitudinal and transversal direction (ASTM D 2732).

Lid films usually comprise at least a heat sealable layer and an outer skin layer, which is generally made up of heat resistant polymers or polyolefin. The sealing layer typically comprises a heat-sealable polyolefin which in turn comprises a single polyolefin or a blend of two or more polyolefins such as polyethylene or polypropylene or a blend thereof. The sealing layer can be further provided with anti-fogging properties by incorporating one or more anti-fogging additives into its composition or by coating or spraying one or more anti-fogging additives onto the surface of the sealing layer by technical means known in the art.

The sealing layer may further comprise one or more plasticizers. The skin layer may comprises polyesters, polyamides or polyolefin. In some structures, a blend of polyamide and polyester can advantageously be used for the skin layer.

In some cases, the lid films comprise a barrier layer. Barrier films typically have an OTR (evaluated at 23°C and 0 % R.H. according to ASTM D-3985) below 100 cm³/(m²·day·atm) and more frequently below 80 cm³/(m²·day·atm). The barrier layer is usually made of a thermoplastic resin selected among a saponified or hydrolyzed product of ethylene-vinyl acetate copolymer (EVOH), an amorphous polyamide and a vinyl-vinylidene chloride and their admixtures. Some materials comprise an EVOH barrier layer, sandwiched between two polyamide layers. The skin layer typically comprises polyesters, polyamides or polyolefin.

In some packaging applications, the lid films do not comprise any barrier layer. Such films usually comprise one or more polyolefin herein defined. Non-barrier films typically have an OTR (evaluated at 23°C and 0 % R.H. according to ASTM D-3985) from 100 cm³/(m²·day·atm) up to 10000 cm³/(m²·day·atm), more typically up to 6000 cm³/(m²·day·atm).

Peculiar polyester-based compositions are those used for tray lidding of ready-to-eat meal packages. For these films, the polyester resins can make up at least 50%, 60%, 70%, 80%, or 90% by weight of the film. These films are typically used in combination with polyester-based supports.

For example, the container can be made of a cardboard coated with a polyester resin or it can be integrally made of a polyester resin. Examples of suitable containers for the package are CPET, APET or APET/CPET containers, either foamed or not foamed.

Usually, biaxially oriented PET is used as the lid film due to its high thermal stability at standard food heating/cooking temperatures. Often biaxially oriented polyester films are heat-set, i.e. non-heat-shrinkable. To improve the heat-sealability of the PET lidding film to the container a heat-sealable layer of a material with a lower melting point is usually provided on the film. The heat-sealable layer may be coextruded with the PET base layer (as disclosed in EP-A-1529797 and WO2007/093495) or it may be solvent- or extrusion-coated over the base film (as disclosed in US 2,762,720 and EP-A-1252008).

Particularly in the case of fresh meat packages, twin lidding film comprising an inner, oxygen-permeable, and an outer, oxygen-impermeable, lidding film are advantageously used. The combination of these two films significantly prevents the meat discoloration also when the packaged meat extends upwardly with respect to the height of the tray walls, which is the most critical situation in barrier packaging of fresh meat. These films are described for example in EP1848635 and EP0690012. In some examples, twin lidding film can be made by sealing two suitable films in the region of the corners by means of very small bonding or sealing points. In this manner, the twin lidding film can be handled more easily in the different stages of the packaging process.

The lid film can be monolayer. Typical composition of monolayer films comprise polyesters as herein defined and their blends, or polyolefins as herein defined and their blends.

In all the film layers described herein, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents, anti-fogging agents or compositions, and the like additives known to those skilled in the art of packaging films.

The films suitable for lidding applications can advantageously be perforated, in order to allow the packaged food to breath.

Those films may be perforated by using different technologies available in the art, through laser or mechanical means such as rolls provided with several needles.

The number of perforations per unit area of the film and their dimensions affect the gas permeability of the film.

Micro perforated films are usually characterized by OTR value (evaluated at 23°C and 0 % R.H. according to ASTM D-3985) from 2500 cm³/(m²·day·atm) up to 1000000 cm³/(m²·day·atm).

Macro perforated films are usually characterized by OTR (evaluated at 23°C and 0 % R.H. according to ASTM D-3985) higher than 1000000 cm³/(m²·day·atm).

Furthermore, the films herein described for lidding applications can be formulated to provide strong or peelable sealing onto the support. A method of measuring the force of a peelable seal, herein referred to as "peel force" is described in ASTM F-88-00. Acceptable peel force values fare in the range from 100 g/25 mm to 850 g/25 mm, from 150 g/25 mm to 800 g/25 mm, from 200 g/25 mm to 700 g/25 mm.

The desired seal strength is achieved specifically designing the tray and the lid formulations.
In general, one or more layers of the lid film can be printed, in order to provide useful information to the consumer, a pleasing image and/or trademark or other advertising information to enhance the retail sale of the packaged product. The film may be printed by any suitable method, such as rotary screen, gravure or flexographic techniques as known in the art.

### Definitions and conventions concerning materials

PVDC is any vinylidene chloride copolymers wherein a major amount of the copolymer comprises vinylidene chloride and a minor amount of the copolymer comprises one or more unsaturated monomers copolymerizable therewith, typically vinyl chloride, and alkyl acrylates or methacrylates (e.g. methyl acrylate or methacrylate) and the blends thereof in different proportions. Generally a PVDC barrier layer will contain plasticizers and/or stabilizers as known in the art.

As used herein, the term EVOH includes saponified or hydrolyzed ethylene-vinyl acetate copolymers, and refers to ethylene/vinyl alcohol copolymers having an ethylene co-monomer content preferably comprised from about 28 to about 48 mol%, more preferably, from about 32 to about 44 mol% ethylene, and even more preferably, and a saponification degree of at least 85%, preferably at least 90%.

The term "polyamides" as used herein is intended to refer to both homo- and co- or ter-polyamides. This term specifically includes aliphatic polyamides or co-polyamides, e.g., polyamide 6, polyamide 11, polyamide 12, polyamide 66, polyamide 69, polyamide 610, polyamide 612, copolyamide 6/9, copolyamide 6/10, copolyamide 6/12, copolyamide 6/66, copolyamide 6/69, aromatic and partially aromatic polyamides or co-polyamides, such as polyamide 61, polyamide 6I/6T, polyamide MXD6, polyamide MXD6/MXDI, and blends thereof.

As used herein, the term "copolymer" refers to a polymer derived from two or more types of monomers, and includes terpolymers. Ethylene homopolymers include high density polyethylene (HDPE) and low density polyethylene (LDPE). Ethylene copolymers include ethylene/alpha-olefin copolymers and ethylene/unsaturated ester copolymers. Ethylene/alpha-olefin copolymers generally include copolymers of ethylene and one or more co-monomers selected from alpha-olefins having from 3 to 20 carbon atoms, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm3. The term linear low density polyethylene (LLDPE) is generally understood to include that group of ethylene/alpha-olefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Another suitable ethylene copolymer is an ethylene/unsaturated ester copolymer, which is the copolymer of ethylene and one or more unsaturated ester monomers. Suitable unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms.

Ionomers are copolymers of an ethylene and an unsaturated monocarboxylic acid having the carboxylic acid neutralized by a metal ion, such as zinc or, preferably, sodium.

Useful propylene copolymers include propylene/ethylene copolymers, which are copolymers of propylene and ethylene having a majority weight percent content of propylene, and propylene/ethylene/butene terpolymers, which are copolymers of propylene, ethylene and 1-butene.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and an non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene-alpha-olefin co-polymer, propylene-alpha-olefin co-polymer, butene-alpha-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resin, polymethylpentene, etc.

The term "polyester" is used herein to refer to both homo-and co- polyesters, wherein homo-polyesters are defined as polymers obtained from the condensation of one dicarboxylic acid with one diol and co-polyesters are defined as polymers obtained from the condensation of one or more dicarboxylic acids with one or more diols. Suitable polyester resins are, for example, polyesters of ethylene glycol and terephthalic acid, i.e. poly(ethylene terephthalate) (PET).

Preference is given to polyesters that contain ethylene units and include, based on the dicarboxylate units, at least 90 mol%, more preferably at least 95 mol%, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1,4-dicarboxylic acid). Of the aliphatic dicarboxylic acids, the (C₃-Ci₉)alkanedioic acids are particularly suitable, in particular succinic acid, sebacic acid, adipic acid, azelaic acid, suberic acid or pimelic acid. Suitable diols are, for example aliphatic diols such as ethylene glycol, diethylene glycol, triethylene glycol, propylene glycol, 1,3-butane diol, 1,4- butane diol, 1,5-pentane diol, 2,2-dimethyl-1,3-propane diol, neopentyl glycol and 1,6-hexane diol, and cycloaliphatic diols such as 1,4- cyclohexanedimethanol and 1,4-cyclohexane diol, optionally heteroatom- containing diols having one or more rings.

Co-polyester resins derived from one or more dicarboxylic acid(s) or their lower alkyl (up to 14 carbon atoms) diesters with one or more glycol(s), particularly an aliphatic or cycloaliphatic glycol may also be used as the polyester resins for the base film. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1,3-butane diol, 1,4-butane diol, 1,5-pentane diol, 2,2- dimethyl-1,3-propane diol, neopentyl glycol and 1,6-hexane diol, and cycloaliphatic diols such as 1,4-cyclohexanedimethanol and 1,4- cyclohexane diol. Examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol; (iv) co-polyesters of ethylene glycol, terephthalic acid and isophthalic acid. Suitable amorphous co-polyesters are those derived from an aliphatic diol and a cycloaliphatic diol with one or more, dicarboxylic acid(s), preferably an aromatic dicarboxylic acid. Typical amorphous copolyesters include co-polyesters of terephthalic acid with an aliphatic diol and a cycloaliphatic diol, especially ethylene glycol and 1,4-cyclohexanedimethanol.

### Detailed description

### First embodiment of the apparatus 1

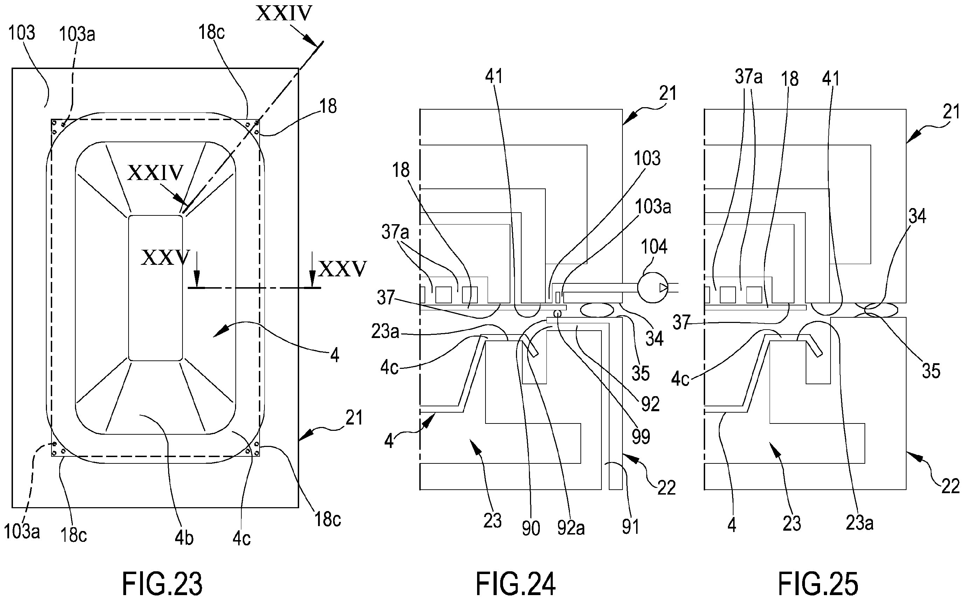

The description of the first embodiment makes reference to figures from 1 to 13 and from 23 to 28. In particular note that figures 23 to 28 disclose aspects which may be present either in the first embodiment described in this section of the description and also in the second embodiment described in a subsequent section of the present description.

FIGs. 1-13 show an apparatus 1 for packaging of a product P arranged on tray 4 according to an embodiment of the present invention. The apparatus 1 is adapted for modified atmosphere packaging, where a plastic film 18 is applied to the top flange 4c of a tray 4 after a modified gas atmosphere has been created inside the tray 4, and/or for vacuum skin packaging of the product P, where a thin film of plastic material is draped down on the product and intimately adheres to a top flange and to the inner surface of the support as well as to the product surface thus leaving a minimum, if any, amount of air or modified gas within the packaging. The apparatus 1 may also be used in case a film sheet applied to a tray and neither vacuum nor modified atmosphere is created.

The apparatus 1 comprises a frame 2, a transport assembly 3 for displacing the tray 4, a film supplying assembly 5, a film cutting assembly 6, a transfer device 7 and a packaging assembly 8.

The tray 4 shown in the enclosed figures presents a base wall 4a, a side wall 4b emerging from the base wall and delimiting a space where a product P can be housed, and a top flange 4c radially protruding from the side wall 4b: in the example shown the top flange 4c has a horizontal flat portion defining a suitable sealing surface for sealed fixing of a plastic film.

The frame 2 defines a base body of the apparatus 1 and serves to carry and support various parts of the apparatus 1 as herein described.

The transport assembly 3 comprises a displacement plane 20, which may be a physical plane (e.g. a conveyor belt) carrying and displacing the trays or an ideal plane along which the trays are guided e.g. by means of rails or guides.

The plane 20 is defined on a top area of the frame and a conveyor 46 is arranged in correspondence of the sliding plane 20. In the example shown, the transport assembly 3 is carried by, e.g. fixed to, the frame 2 so that the sliding plane 20 is substantially horizontal and the conveyor 46 moves the trays 4 according to the horizontal direction indicated by the arrow A1 shown in FIG. 1. The transport assembly 3 arranged on the frame 2 is configured for displacing the tray 4 along a predefined path from a loading station, where trays 4 which may already be filled with the respective product(s) P are positioned, to the packaging assembly 8 where a film 18 is tightly fixed to each tray 4, as explained in detail below. The conveyor 46 displaces the trays (e.g. a prefixed number of trays each time) towards and into the packaging chamber, into proper position for receiving the film. For example, a control unit 100 (which is further described below) may control the conveyor 46 to displace a prefixed number of trays 4 each time from a region outside the packaging assembly, to a region within the packaging assembly where the tray or trays are directly below or in superimposition with the film to be fixed to the tray. The conveyor may, for example, include a first transfer device 46a (such as the belt shown in FIG. 1) configured for bringing the trays in close proximity to the packaging assembly and a second transfer device 46b adapted to pick up one or more of said trays and to bring them into the packaging assembly 8. The second transfer device may, for example, include actuators or arms acting on the sides of the trays such as to pick up the supports from the first transfer device, to bring them into the packaging station, and then to return to the first transfer devise to pick up a new set of trays 4. Alternatively, the conveyor 46 may include pushers (e.g. in the form of bars extending transverse to said direction A1) acting on the trays and pushing the trays into the packaging assembly 8. The pushers may be moved by chains or belts and may be moved into the packaging assembly to properly position a number of trays, and then be retracted from the packaging assembly, once the trays have reached their proper position inside the packaging assembly. In some examples, the pushers can be integrated into the packaging assembly in a manner not interfering with the process taking place inside the packaging assembly. In these examples, the pushers are first extended in order to retrieve a number of trays and move them into the packaging assembly, and then retracted until opening of the packaging assembly following the execution of the process taking place inside the packaging assembly. According to a further alternative, the conveyor 46 may include housings (e.g. in the form of plates provided with cavities for receiving a number of trays) which are moved along said direction A1 and which are moving inside the packaging station together with the supports or trays 4. According to this alternative, the housings have a suitable shape in order to be hosted inside the packaging station during the application of the film to the tray 4.

It is noted that the products P may be positioned on the tray 4 either upstream from the loading station or in any location between the loading station and the packaging assembly 8. Also, in accordance with a further alternative which is not shown in the enclosed drawing tables, the trays may be thermoformed online from a continuous film and then fed to the packaging assembly 8. The transport assembly 3 further comprises a motor 9 (e.g. a stepping motor unit) for operating the conveyor belt 46 with a continuous or step-by-step movement.

The film supply assembly 5 may comprise a film roll 11 supplying a continuous film 10. The film supplying assembly 5 may further comprise a roll support arm 11a (represented in dashed lines in FIG. 1) fixed to the frame 2 and suitable for supporting the film roll. Further, the film supplying assembly 5 may comprise film punching devices (not shown, as these are known in the art) essentially configured to provide the correct profile to the film edges to match (when transversally cut in the cutting assembly 6) the shape of the tray 4 opening. The punching devices may also help to keep an unrolled portion of film pulled from the film roll 11 aligned according to a prefixed direction. The film supplying assembly 5 may also comprise pinch rollers 12 and/or other means for pulling the film 10 from the film roll 11 and properly position it in correspondence of the film cutting assembly 6 (e.g., said means may comprise pincers acting on the side of the film and/or pincers acting on the front edge or side edges of the film) and configured to pull the film. The type of film 10 rolled up on the film roll 11 and may correspond to one of the types of film described above, depending upon the specific application.

The film cutting assembly 6 shown in the figures is an exemplary cutting assembly illustrating one of several alternatives for cutting film 10 into discrete film sheets 18. The film 10 could be pre-cut in sheets at another location and provided in the form of stacks of film sheets ready for heat sealing. In the embodiment of figure 1, the film 10 is cut locally, for example by a cutting assembly (such as cutting assembly 6) located external to the packaging chamber 24 defined by packaging assembly 8. The cutting assembly is configured for forming a sequence of film sheets 18 which are then supplied to the packaging assembly 8. In both cases, the sheets of film 18, either pre-cut or cut online, are picked by transfer device 7 and transferred into the packaging assembly. Alternatively a component of the packaging apparatus (for example a part of the packaging assembly) is actuated and moved into a pick-up position, where the component can pick up a single film sheet 18, and then moved back to the packaging assembly or packaging chamber, in order to properly position the film sheet 18 above a respective tray 4.

The film cutting assembly 6 comprises a cutting device 13 with a blade 14 and a blade piston 15. This piston 15 may be replaced by any other kind of electric, pneumatic, or hydraulic (linear) actuator. The blade piston 15 is preferably fixed to the frame 2 and is connected to the cutting device 13 so as to push and pull it in a direction transverse to the unrolled portion of the film 10, as indicated by the double arrow A2 shown in FIG. 1. The film cutting assembly 6 is described here, illustrating one possibility of supplying the film to the packaging apparatus. In some examples, however, the film material can be supplied in a manner where the film is pre-cut and supplied, for example, on a sheet by sheet basis, delivered from a stack of pre-cut film sheets.

In order to move the cut sheets of film 18 into the packaging assembly 8 of the packaging apparatus 1 according to a first embodiment, the transfer device 7 is used. The transfer device 7 includes a backing structure 16 having a flat holding surface 17 adapted for receiving the at least one or more film sheets 18 cut by blade 14. While backing structure 16 is described here and shown in the figures as having a substantially flat holding surface 17, it is noted that the holding surface 17 does not have to be flat, but can have any suitable shape (e.g., concave, convex, corrugated, having some texture, having protrusions and/or recesses, etc.). FIG. 1 shows that the blade 14 is configured to cut the continuous film 10 such that a separate sheet of film 18 can be positioned in correspondence of the flat holding surface 17. The backing structure 16 may hold the cut film sheet 18 using one or more of:
- a vacuum system connected to one or more channels present in the backing structure and leading to apertures located one holding surface 17,
- mechanical holders, such as pincers, clamps or the like,
- adhesive systems, for example comprising adhesive portions associated to the holding surface 17,
- heating systems, for example comprising heatable portions (controlled by control unit 100) associated to the backing structure causing heating of the holding surface 16 and thus of the film sheet 18 in order to increase stickiness of the film sheet to the holding surface 17,
- electric systems, for example the holding surface may be charged with a polarity different from that typical of the plastic sheet 18. In this case the control unit may be connected to a voltage generator and may control the electric charging of surface 17.

The transfer device 7 also includes a mechanism, for example carried by frame 2, active on the backing structure 16 and configured for relatively moving the backing structure 16 with respect to the packaging assembly 8 between a first position, shown in FIG. 1, where the baking structure 16 is positioned near the cutting device, for example immediately downstream the blade 14 with respect to the movement imposed to film 10, and at least a second position, where the backing structure 16 is positioned inside the packaging chamber 24 of the packaging assembly 8. For example, the mechanism includes a transfer actuator active on the backing structure 16 and configured for moving the backing structure 16 along a path suitable for achieving the displacement between said first and second positions. The transfer actuator may be any kind of electric, pneumatic or hydraulic actuator known in the art and suitable for actuating the backing structure in the required manner. As an alternative, instead of moving the backing structure 16, an upper tool 21 of the packaging assembly 8 may be mobile with respect to frame 2 and be configured to pick the cut film sheets 18 from the area immediately downstream the cutting device 13. In this case the transfer device 7 would include a mechanism 25, for example carried by frame 2, active on the packaging assembly 8 and configured for displacing the upper tool 21 between a first position, where the upper tool 21 is positioned in correspondence of the backing structure 16 and configured to pick up from the backing structure 16 the one or more cut film sheets 18, and at least a second position, where the upper tool 21 is aligned to the lower tool 22 and configured to position at least one film sheet 18 above said tray 4. In order to achieve the above movement the mechanism may displace the upper tool 21 along any suitable path. For example, FIG. 1 schematically shows that the mechanism 25 may include a transfer actuator 26 configured for displacing the upper tool 21 at least along a direction parallel to said horizontal direction A1 as indicated by double arrow A4 in FIG. 1, and to rotate the upper tool around an axis which is horizontal and perpendicular with respect to direction A4, so that the lower end thereof faces the backing structure 16 in order to pick up the film sheets 18. Alternatively the mechanism 25 may cause rotation of the upper tool around a pivoting axis and/or a translational displacement in order to move the upper tool between the respective positions along an appropriate path. The transfer actuator 26 may comprise any kind of electric, pneumatic or hydraulic actuators or combinations thereof known in the art.

Moving now to a more detailed description of the packaging assembly 8, it should be noted that the packaging assembly is mainly devoted to tightly fixing the film (in the case of first embodiment in the form of film sheets 18) to one or more trays 4. At this purpose, the packaging assembly 8 has a lower tool 22 defining a prefixed number of seats 23, wherein each seat is configured for receiving at least one tray 4. The packaging assembly also includes an upper tool 21 facing the lower tool 22 and cooperating with this latter to define a packaging chamber 24. The upper tool 21 also preferably comprises an insert 36 having a respective bottom surface 37 configured in use to contact the film or to stay above the film; in the embodiment of figure 1, the insert is a film holder having surface 37 which is an active surface for holding the film sheet or sheets 18 above the respective seats, such that each film sheet 18 may be kept exactly above the respective tray 4 for then allowing heat bonding of each film sheet to the tray flange 4c of the respective tray. In the embodiment shown the bottom or active surface 37 is flat, but of course it may alternatively be concave. For the purpose of holding the bottom or active surface may have suction holes 37a connected to a suction system (not shown) also controlled by control unit 100.

The apparatus 1 further includes a control unit 100 connected to the packaging assembly 8 and configured for commanding the packaging assembly 8 to pass from a first operating condition, where said packaging chamber 24 is open to receive the film, and a second operating condition, where said packaging chamber 24 is closed, optionally hermetically closed. It is noted that packaging assembly comprises at least one main actuator 33 active on at least one of said upper and lower tools 21 and 22; the main actuator is controlled by the control unit 100 which is configured for acting on the main actuator 33 and commanding relative movement of the upper and lower tools along a main direction (A5 in figure 1), between said first operating condition, where the upper tool 21 is spaced apart from the lower tool 22 and said packaging chamber 24 is open to receive one or more of said films 18, and said second operating condition, where a closure surface 34 of the upper tool 21 tightly abuts against a closure surface 35 of the lower tool 22 to hermetically close said packaging chamber 24 with respect to an atmosphere outside the apparatus 1.

The control unit 100 is also connected to the transport assembly 3, to the film supplying assembly 5, to the film cutting assembly 6, to the transfer device 7 and to the packaging assembly 8 and is configured for activating the transfer device 7 so as to control motion of the backing structure 16 (or of the upper tool 21, as described above), into the different operating positions described above. The control unit 100 is configured for synchronizing activation of the transfer device 7 with passage of the packaging assembly 8 from the first to the second operating condition so that the movement of the backing structure 16 (at least the portion of movement where the backing structure enters into the space between the lower and upper tools 21, 22) is caused to take place when the packaging chamber 24 is open while the packaging chamber 24 is closed only once the backing structure 16 has transferred the cut film sheet 18 to the upper tool 21 and has been retracted from the packaging chamber 24. The control unit 100 may also be configured for synchronizing the conveyor 46 such that movement of a prefixed number of trays 4 from a region outside the packaging chamber 24 to a region inside the packaging chamber 24 is caused to take place when the packaging chamber 24 is open while the packaging chamber 24 is closed only once said prefixed number of trays 4 is in proper position relative to the upper tool 21.

Going back to the structure of the packaging assembly 8, it is noted that each of said seats 23 in the lower tool 22 presents a mouth 23b peripherally delimited by an abutment surface 23a: in practice the abutment surface surrounds the mouth of the respective seat 23 and forms a corresponding radial band designed such that, when the seat 23 receives a respective tray 4, the flange of the tray rests on the radial band formed by the abutment surface 23a. As it is visible from figures 2-8, the insert 36 in the upper tool 21 is sized to have the bottom surface 37 radially smaller than the abutment surface 23a and is peripherally surrounded by a heating structure 40 (connected to a heating system not shown as per se conventional and well known) having a respective heating surface 41 which extends radially outside with respect to the bottom surface 37 of the insert 36.

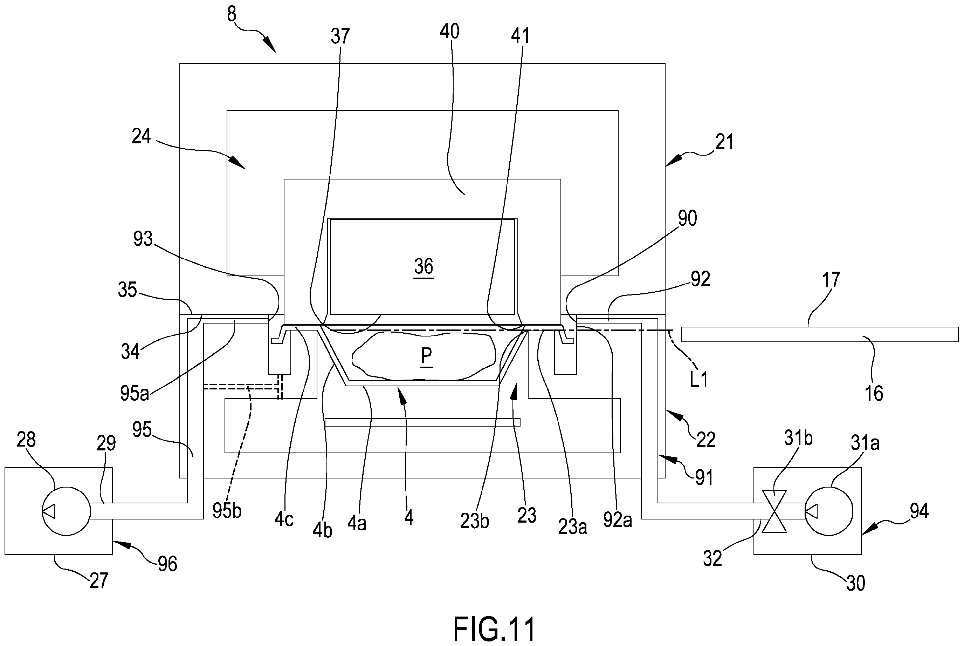

In greater detail, the insert 36 and the heating structure 40 are mounted such that the heating surface 41 of the heating structure 40 surrounds the bottom surface 37 and overlaps the abutment surface 23a of a respective one of the seats present in the lower tool (at least when the packaging assembly 8 is in said second operating condition): in this way, the tray flange 4c (or at least an annular portion of the flange 4c) is positioned between the abutment surface 23a and the heating surface 41. The heating structure 40 and insert 36 may be relatively movable the one with respect to the other along said main direction A5 such that the heating surface 41 of the heating structure 40 is selectively positionable at a position where its heating surface 41 does not contact a film held by the insert 36 (see figures 2 to 10), and in a position (figure 11) where the heating surface 41 contacts the film, in particular a film peripheral band, to cause heat bonding and tight fixing of the film at least to the tray flange 4c. Note that, several alternative solutions, are possible in order to achieve the above relative movement: in the non-limitative example shown the insert 36 is connected to the upper tool 21 such that the vertical position of the bottom surface 37 and that of the closure surface 34 of the upper tool 21 is the same (i.e. they both lie in use on a same plane, which is normally horizontal) during the cycle: for instance the two bodies 40 and 21 may be rigidly connected. On the other hand the heating surface 41 is generally retracted with respect to the active surface 37 and this may be achieved either with an actuator relatively moving the heating structure with respect to the upper tool, or by having the upper tool with the insert supported by the frame 3 in an elastic manner such that an upward movement of the lower tool would upwardly move the assembly formed by the upper tool and the insert thereby causing the heating surface 41 to approach the lower tool.

As to the materials used, the insert 36 may made in an insulating material or it may be at least thermally insulated with respect to the heating structure to avoid that the bottom surface 37 reaches the same temperature of the heating surface 41.

In an alternative arrangement, which is not shown in the enclosed drawings, the components 40 and 36 may be in one single body which may have a bottom surface sized to overlap, optionally completely overlap, the abutment surface 23a of each seat 23 (at least when the packaging assembly 8 is in said second operating condition). In this case the single body would include one or more heaters configured for heating the entire bottom surface, heating different portions of the heating surface at different temperatures or only heating a portion of the bottom surface overlapping the abutment surface 23a.

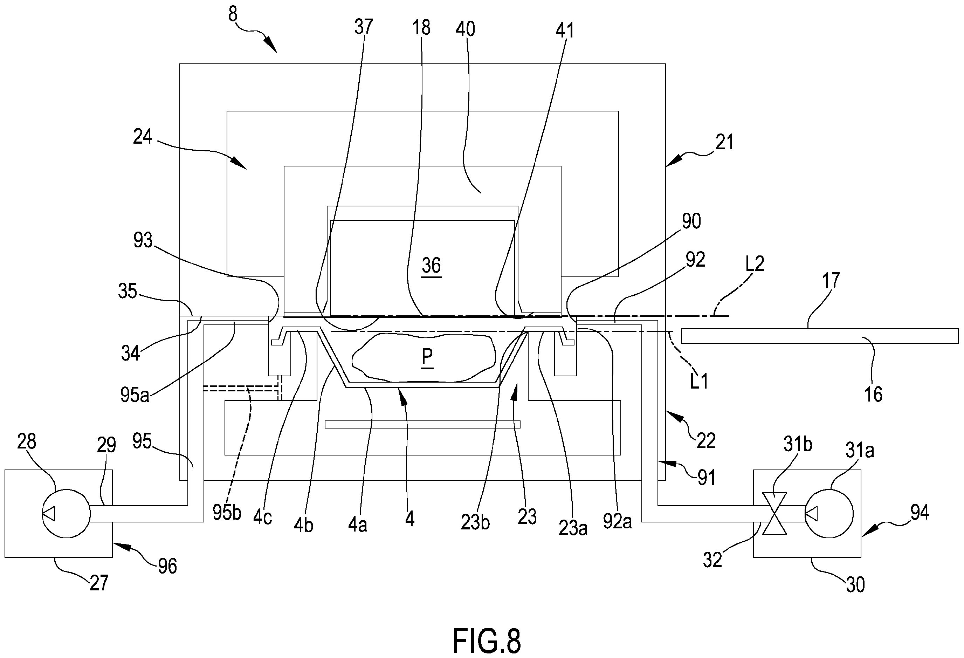

According to one aspect, the packaging assembly 8 forms - for each of said seats 23 - a number of first apertures 90 configured to inject gas towards the respective of said seats; note the same first apertures 90 may also be used for withdrawing gas. More in detail, as shown in figures 24 and 26-29, the first apertures 90 are positioned in correspondence of a corner region 23c of the mouth 23b of the respective seat 23: for example one or more first apertures may be positioned in correspondence of one, two or more corner regions 23c. According to one aspect, the first apertures 90 are located and extend above the abutment surface 23a: in other words the fluid passage area of the first apertures 90 are formed by the terminal edges (92a) of ejectors (92) extending entirely above a first ideal plane L1 (see for example figure 8) passing through the abutment surface in order to be able, during delivery of gas into the chamber 24, to eject a gas stream which flows tangentially and parallel to the abutment surface 23b and therefore tangentially and parallel with respect to the flange 4c resting above the abutment surface so that substantially no lifting or displacing force is exerted onto the tray 4 which remains always properly positioned in the respective seat. Again in connection with the position of the first apertures, it may be noted that the bottom surface 37 of the insert 36 lies on a second ideal plane L2 parallel to and vertically spaced apart from the first ideal plane, and that the ejectors 92 and first apertures 90 are positioned and extend between the first and second ideal planes L1 and L2.

Going in further detail, referring again for instance to figure 8, the lower tool 22 hosts a number of first conduits 91 presenting, at one end thereof, terminal edges 92a delimiting the first apertures 90. Note the first conduits 91 may be made with tubing or more likely be channels obtained inside the body of the lower tool: in any case, the first conduits are positioned and shaped such as to form said ejectors 92 parallel to the abutment surface 23b and entirely extending above the same abutment surface 23b; the first apertures 90 are formed by the passage areas delimited by the terminal edges 92a of said ejectors of said conduits 91 and lie on a surface generally transverse (for instance perpendicular) to the first and second ideal plane L1 and L2.

According to a further aspect, each of the seats 23 defined by the lower tool 22 has a respective mouth 23b of polygonal shape: for instance the mouth or mouths 23b may be rectangular; the first apertures 90 are located in correspondence of corners of each polygonal mouth 23b. In other words the packaging assembly (and particularly the second tool) define first apertures which are located in proximity and directly face the corner regions of each mouth of said seat or seats 23.

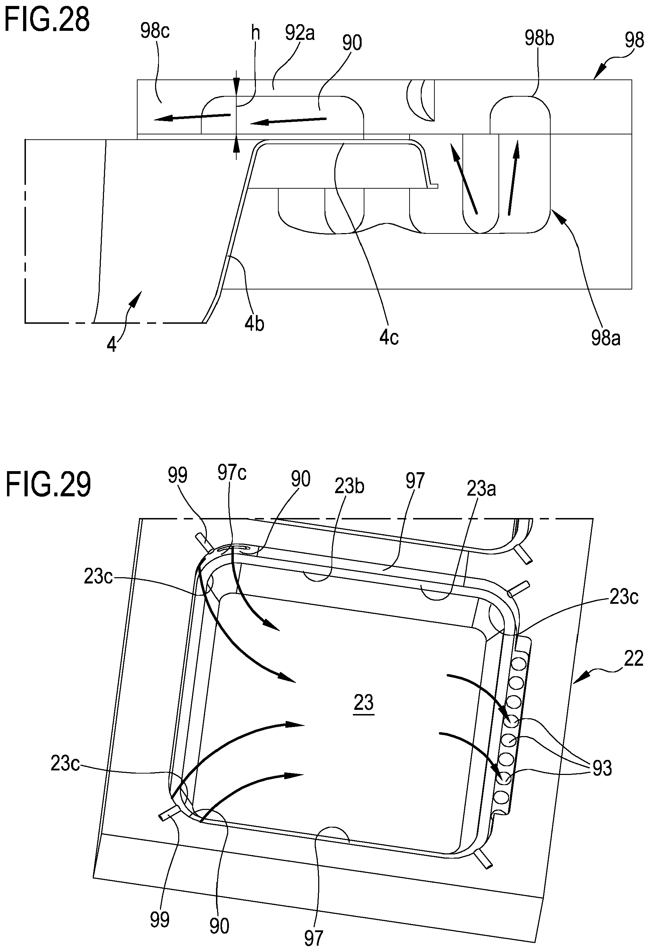

In an example at least one first aperture may be provided at a first corner of a mouth and at least one further first aperture at a second corner of the same mouth (figures 23 and 29) adjacent to the first corner: in particular the apertures may be located on adjacent corners and be placed symmetrically with respect to a plane of symmetry of the seat mouth perpendicular to the first ideal plane L1 of the abutment surface 23b. In accordance with the non-limiting embodiment shown in figures 23-29, the shape of the mouth of each seat is rectangular and thus designed to receive a tray 4 with a rectangular shape top flange 4c: in this case the first apertures are located at two adjacent corners of the mouth and may be configured to direct the ejecting flow towards a center zone of the mouth (figure 29). Furthermore, for each seat 23, a number of second apertures 93 located on a side of the same seat 23 opposite to the first apertures 90, i.e., on the side of the seat opposite to the corners where the first apertures are located. Also the second apertures 93 may be positioned and entirely extend above the abutment surface 23a delimiting the mouth of each respective seat.

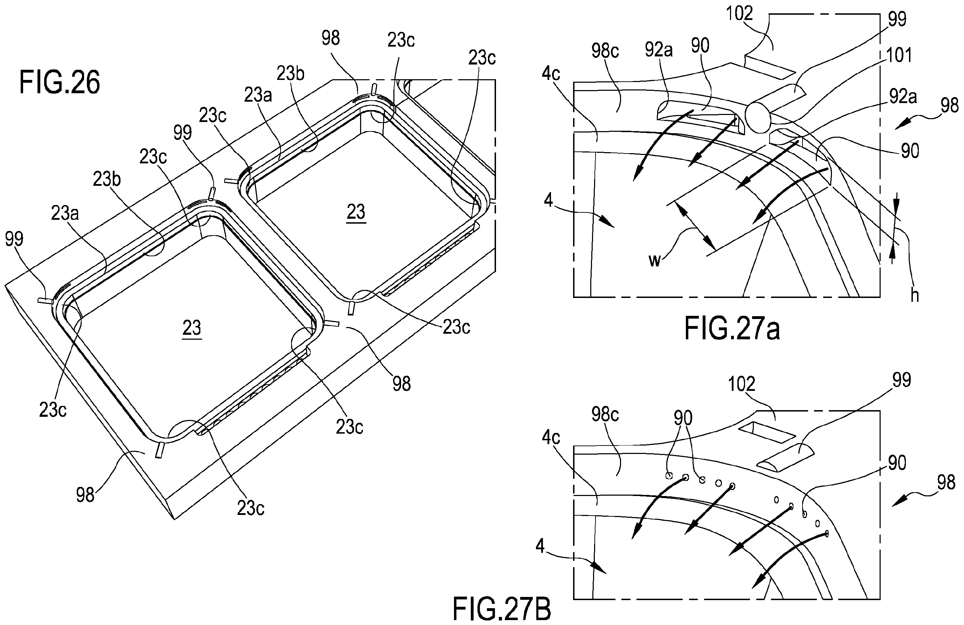

Alternatively or in addition, the second apertures may be located below the abutment surface, for instance in correspondence of the bottom of a recess surrounding the seats 23 (as shown, e.g. in figures 2-10). In the case where each seat 23 has a substantially rectangular mouth defining first and second opposite sides connected by respective corner regions 23c, the first apertures may be located at adjacent corner regions while the second apertures may be located in correspondence of one of said sides opposed to the corner regions where the first apertures are located. As shown in the drawings of figures 26-29, two or more of said first apertures 90 may be provided at each corner region 23c. In case two or more apertures are present in each corner regions, the apertures are preferably positioned symmetrically with respect to a plane bisecting the corner and perpendicular to the first ideal plane L1 of the abutment surface.

The first conduits 91 leading to the first apertures 90 may be channels obtained in the lower tool and present an end, terminating in said terminal edges 92a and defining said first apertures 90, and an opposite end, in fluid communication with a gas supply circuit 94, which may include a controlled atmosphere arrangement 30 as further described herein below. The second apertures 93, on the other hand, are connected to second conduits 95, which may be formed by channels obtained in the lower tool, having an end, terminating in said second apertures, and an opposite end, in fluid communication with a gas evacuation circuit 96: the gas evacuation circuit may include a vacuum arrangement as further disclosed herein below. As shown in the drawings, the second conduits 95 may end with a portion 95a leading to second apertures above L1 and a second portion leading to second apertures 93 located below plane L1. The gas supply circuit 94 and the gas evacuation circuit 96 are connected with the control unit 100 which is further configured to command the supply circuit to supply gas having a controlled composition to the first conduits, and to command the discharge circuit to withdraw gas from the second conduits. The controlled atmosphere arrangement 30 is part of the gas supply circuit and is connected to the packaging chamber 24 and configured for injecting a gas stream into said packaging chamber; the controlled atmosphere arrangement comprises at least one injection device including an injection pump 31a and/or one injection valve 31b acting on at least one injection pipe 32 connecting the inside of said chamber, e.g., via said first conduits 91, to the a source of controlled gas (not shown) which may be arranged externally to the apparatus 1. The control unit 100 may be configured to control opening and closing of the injection valve (or activation of the injection pump) to inject said stream of controlled gas at least when the packaging assembly 8 is in said second operating condition, i.e. with said packaging chamber 24 hermetically closed. As mentioned, the apparatus 1 may also comprise a vacuum arrangement 27, part of the gas evacuation circuit 96, connected to the packaging chamber 24 and configured for removing gas from inside said packaging chamber. The vacuum arrangement comprises at least one vacuum pump 28 and at least one evacuation pipe 29 connecting the inside of said chamber 24 to the vacuum pump. The control unit 100 controls the vacuum pump 28 to withdraw gas from said packaging chamber 24 at least when the packaging assembly is in said second operating condition, i.e. with said packaging chamber hermetically closed.

The control unit 100 may also be configured to control the composition of the modified atmosphere generated inside the chamber 24. For example, the control unit 100 may regulate the composition of the gas stream injected into the packaging chamber. The gas mixtures injected into the packaging chamber to generate a modified atmosphere may vary depending upon the nature of product P. In general, mixtures of a modified atmosphere include a volumetric quantity of one or more of N₂, O₂ and CO₂ different from the quantity of these same gases as present in the atmosphere at 20°C and sea level (1 atmosphere pressure). If product P is a produce such as meat, poultry, fish, cheese, baked goods, or pasta, the following gas mixtures may be used (quantities are expressed in volume percentages at 20°C, 1 atm of pressure and slight changes around below quantities are in general acceptable):

| | |
|---|---|
| - Red meat, poultry without skin: | O₂=70%, CO₂=30% or O₂=80%, CO₂=20% |
| - Poultry with skin, cheese, pasta, baked goods: | CO₂=50%, N₂=50% |
| - Fish | CO₂=70%, N₂=30% or CO₂=40%, N₂=30%, O₂%=30 |
| - Processed meat | CO₂=30%, N₂=70% |

The control unit 100 may be configured to control said injection pump or said injection valve 31 to start injecting said stream of controlled gas either after a prefixed delay from activation of said vacuum pump 28 or after a prefixed level of vacuum has been reached inside said packaging chamber 24. In a further aspect the control unit 100 may cause the start of the injection of said stream of controlled gas for creating a modified atmosphere while said vacuum pump 28 is still active so as to shorten the time for creating the modified atmosphere. It is noted, however, that high oxygen content in the gases evacuated and/or supplied or otherwise processed can entail a substantial risk of explosion in some of the components (e.g. the pump or pumps). Consequently, suitable components should be used. Moreover, as it is preferable to avoid having very strong vacuum in the packaging chamber 24 and at the same time it is desirable to ensure a proper atmosphere inside the chamber it is advantageous stopping the vacuum pump after opening the gas injection. In this way the pressure inside the packaging chamber can be controlled in order to not decrease below a desired value. During the simultaneous operation of the vacuum pump 28 and the injection of said stream of controlled gas, the gas injected is mixed with residual air and the vacuum pump 28 continues to remove the mixture so that the amount of gas and/or air initially present in the packaging chamber is continually decreased. This flushing of gas and mixing of the gas and residual air is very important in order to achieve the desired controlled atmosphere in an effective and efficient manner, while ensuring that the desired pressure (i.e. level of vacuum) is achieved.

According to a further aspect, it is noted that the control unit 100 is configured to control said injection pump 31 such that the gas flow is not injected at a speed that is too high and that may impair the firm holding of the cut film by the upper tool. The control unit 100 may control gas injection at a gas pressure set below a limit to prevent detachment of the film from the upper tool 21 or inaccurate positioning thereof in correspondence of the upper tool 21. In one example, the injection pressure is maintained between 1.3 and 4.0 bar, or preferably between 1.5 and 3.0 bar.

Note that in the examples shown, the evacuation pipe 29 and the injection pipe 32 communicate with a lower portion of the packaging chamber which is separated from an upper portion of the packaging chamber. In order to allow proper circulation of gas within the entire packaging chamber the upper and lower portions of packaging chamber 8 are fluidly connected by apertures or channels located such as not to be occluded by the tray walls when the tray is positioned in the seats 23.

Although the apparatus 1 may have one or both the vacuum arrangement 27 and the controlled atmosphere arrangement 30, it is to be understood that the control unit 100 of the apparatus 1 may also be configured to tightly engage the film sheets 18 to the trays without activating the vacuum arrangement or the controlled atmosphere arrangement and thus leaving the normal environment atmosphere within the tray. This may be, for example, the case for non-perishable products.

In accordance with a further aspect and in order to generate gas streams of appropriate shape and direction, the first apertures 90 located at corner regions 23c of the mouth 23b of each seat 23 may have the shape of an elongated slit having a width w sensibly greater than a height h: in particular the width w of each slit aperture is the distance between two side ends of each aperture as measured parallel to an horizontal plane and is at least two times greater than the height of each slit aperture, the height being the distance between the top and the bottom side of each slit measured parallel to a vertical plane (see figures 27A and 28). Alternatively, the first apertures at each corner region may be one or more apertures of a shape different from that shown in figure 27A: for instance figure 27B shows corner regions 23c each having a plurality of first apertures preferably of circular shape and aligned along a horizontal plane. Note that the contours of the apertures follow the shape of the mouth abutment surface at said corner regions: thus in cases, as the one shown in the exemplifying figures, where the corner regions of each mouth 23b and of the abutment surface 23a have a rounded shape, also the aperture contours follow when viewed from above the shape of the corner regions.

As already mentioned the first apertures 90 are located in a specific place relative to the vertical position of the abutment surface 23a and of the bottom surface 37 of the insert 36. In particular, the abutment surface of each seat lies on the first ideal plan L1 and the bottom surface 37 of the insert 36 lies on the second ideal plane L2, which is parallel to and vertically spaced apart from the first ideal plane L1. The terminal edges 92a of the first conduits 91 end between the first and second ideal planes L1 and L2, and thus the first apertures 90 entirely extend in the zone between the first ideal plane and the second ideal plane; as shown in the drawings the first apertures are slits elongated in a direction parallel to said first and second ideal planes. Furthermore, the terminal edges 92a of the first conduits and thus the first apertures 90 are in a position which is radially external with respect to an outer perimeter of said abutment surface: in other words the apertures are configured to eject gas above the flange 4c, in correspondence of corner regions 23c of the mouth of each seat 23 and in a location radially external with respect to the radial band formed by the abutment surface 23a. This allows to having the first apertures in fixed positions with no need of first conduits of adjustable length and/or position.

In order to facilitate positioning of each tray 4, the lower tool also includes a peripheral formation 97 which protrudes above the abutment surface 23a (figures 26-29) of each seat and which at least partially surrounds the respective radial band of each abutment surface 23a. The first apertures 90 are defined in correspondence of corner zones 97c of the peripheral formation 97, preferably with each aperture extending above the abutment surface 23a at a distance of at least 1 mm, more at least preferably 2 mm, from the abutment surface. As already discussed, the first conduits 91 terminally lead to the ejectors 92 and said first apertures 90.

In accordance with one embodiment which is shown in figures 26, 27A, 27B and 28, each of the first conduits 91 may comprise at least an upwardly extending portion (connected to the controlled atmosphere arrangement) and a connection portion 98 which is located in correspondence of one corner region 23c of a respective mouth 23b; the connection portion 98 defines an internal channel having a bottom segment 98a fluidly connected to said upwardly extending portion of a first conduit 91 and a top segment 98b extending transversally to said upwardly extending portion and terminating into said terminal edges 92a and thereby delimiting one or more of said first apertures 90: in practice each top segment 98b may form a respective of said ejectors 92. The area of fluid passage of said top segment progressively increases proceeding towards the one or more first apertures forming a divergent tract which efficiently slows down the speed of gas injected via the first conduits. In certain cases however it is not excluded that said top segment presents no divergent tract but rather a constant section or convergent tract.

In accordance with a further aspect, each connection portion 98 defines, at said corner regions, part of said peripheral formation 97: in other words each connection portion has a wall 98c directed perpendicular to the abutment surface which, in correspondence of said corner regions, forms the peripheral formation.

Although the above description referred to a packaging assembly with one seat, in accordance to a variant the packaging assembly comprises a plurality of said seats: as shown in figure 26 the plurality of seats are arranged one adjacent to the other (note that although figure 26 shows one row of seats a plurality of rows of seats may be present). In this variant, the connection portion 98 of one of said first conduits 91 is interposed between two corner regions 23c of two adjacent seats 23 and forms one or more first apertures 90 facing one of the two adjacent seats and one or more first apertures 90 facing the other of said two adjacent seats.

As shown in figures 27A, 27B and 28, each connection portion 98 has a top side defining a gripping member 99: for instance the gripping member includes at least one deformable piece (for instance a piece of rubber or other elastomeric material) anchored to the top side of the connection portion. The gripping member may be housed in a recess 101 present on the top side of the connection portion and surrounded (totally or partially) by a flat surface 102 such that a portion of the gripping member emerges from the recess 101 and protrudes above the flat surface 102.

The gripping member 99 of each connection portion 98 is configured to cooperate with a corresponding opposite gripping surface 103 carried by the upper tool: for instance the gripping surface 103 may be a lower abutment surface of the upper tool 21 directly facing the flat surface 102 of each connection portion; each gripping member 99 and corresponding gripping surface 103 - at least when the first and second tools are in the second operating condition - are configured for engaging a peripheral portion of film 18 held by the insert acting as film holder. In particular, as soon as the first and second tools reach the second operating condition, the gripping member 99 and the gripping surface 103 clamp a peripheral portion of the film, more precisely clamp a respective corner flap 18c of the peripheral portion of the film 18 held by the film holder 36. At each gripping surface 103 a plurality of suction holes 103a (figures 23 and 24) may be provided to suck and hold peripheral corner flap 18c of the film: the suction holes are connected to a suction system 104 (for instance including a respective suction pump) also controlled by the control unit 100 which is configured for commanding the suction system to suck gas via the suction holes 103a and attract the peripheral portion of film 18 held by insert.

When the tray apparatus 1 is configured for packaging products into trays having a tray flange and tray base of polygonal shape, then the seats are shaped to have a polygonal mouth 23b and, in an analogous manner, the heating surface 41 of the heating structure 40 and/or the bottom surface 37 of insert 36, have a substantially polygonal shape contour as well. In particular in case trays 4 have a rectangular base and flange, then the seats 23 would present a rectangular mouth 23b and, analogously, the heating surface 41 and/or the bottom surface would have a corresponding perimeter of rectangular shape. Note that polygonal (or rectangular) also includes shapes where corner regions present rounded corners. As shown in figures 2-8 and 23, the corner regions of the heating surface and/or of the bottom surface 37 are rounded or in any case fitted such that the corners portions of a film 18 held by the insert or holder 36 protrude radially outside the heating surface 41 and the bottom surface 37 offering corner flaps which may be clamped by the gripping member(s) 99 and corresponding gripping surface(s) 103. In this connection, the gripping member(s) and the corresponding gripping surface(s) at each said corner region 23c operate in a position radially outside said heating surface or bottom surface perimeter.

### Operation of first embodiment

Although the operation of most of the apparatus 1 according to the first embodiment has been briefly discussed, it should be noted that the control unit 100 governs the overall packaging process executed by the apparatus 1. In particular, as shown in figures 1 and 2, the control unit 100 is configured for commanding the transport assembly 3 to displace said trays 4 into packaging chamber 24, for commanding the film cutting assembly 6 to at least transversally cut the continuous film 10 into discrete film sheets 18, for commanding the transport device 7 to transport the cut film sheets into the chamber 24 (or alternatively to command the upper tool to pick the cut film sheets as described above).

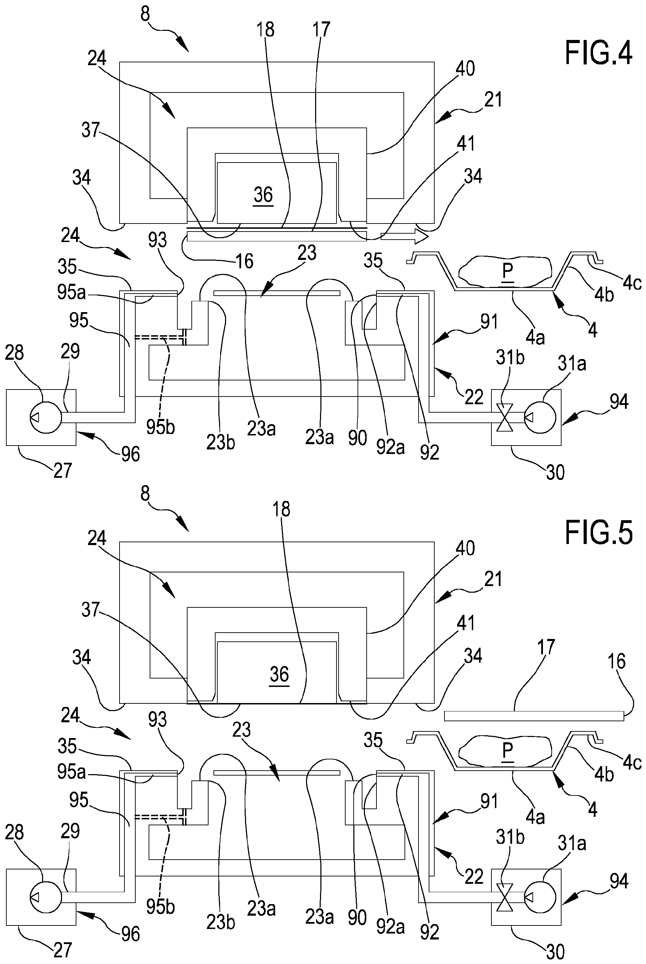

Once the film sheets are properly positioned inside the packaging chamber 24 above the respective trays 4 (figure 3), the control unit 100 commands upper tool 21 to hold the cut film sheets (in this case insert 36 is a true film holder and holding means such as suction holes may be activated) and the transfer device 7 to withdraw the holding plate 16 from the chamber 24 (figures 4 and 5). Once the holding plate 16 leaves the chamber 24, the control unit 100 causes the packaging assembly 8 to pass from the first to the second operating condition, thereby closing the chamber 24 (see figure 8). It should be noted that depending upon the design of the apparatus, the transport assembly 3 may transport the trays 4 inside the packaging assembly during the above described operation of the transfer device such that basically the cut film sheets and the respective trays are simultaneously moved into the packaging chamber.

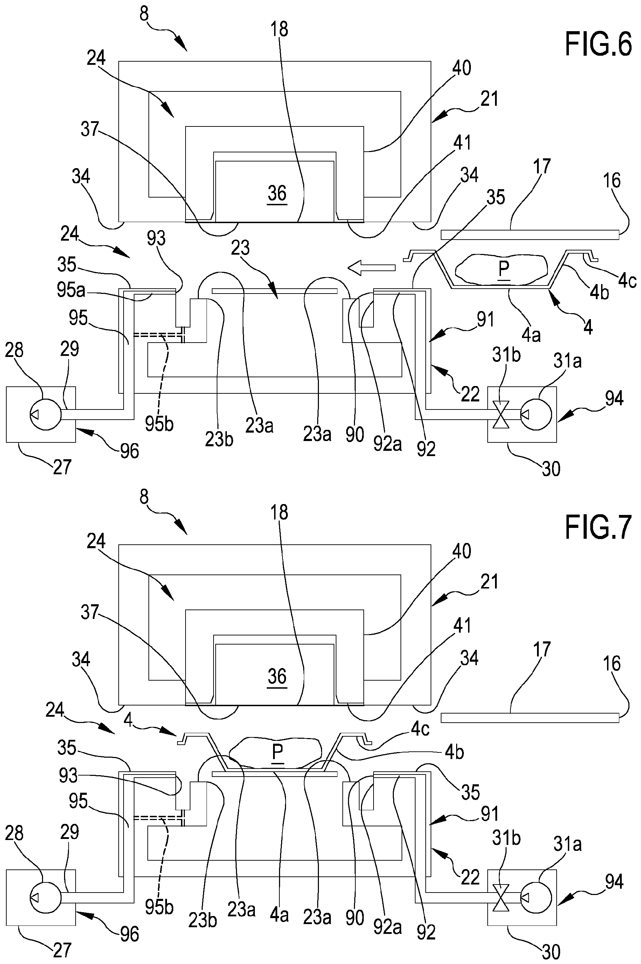

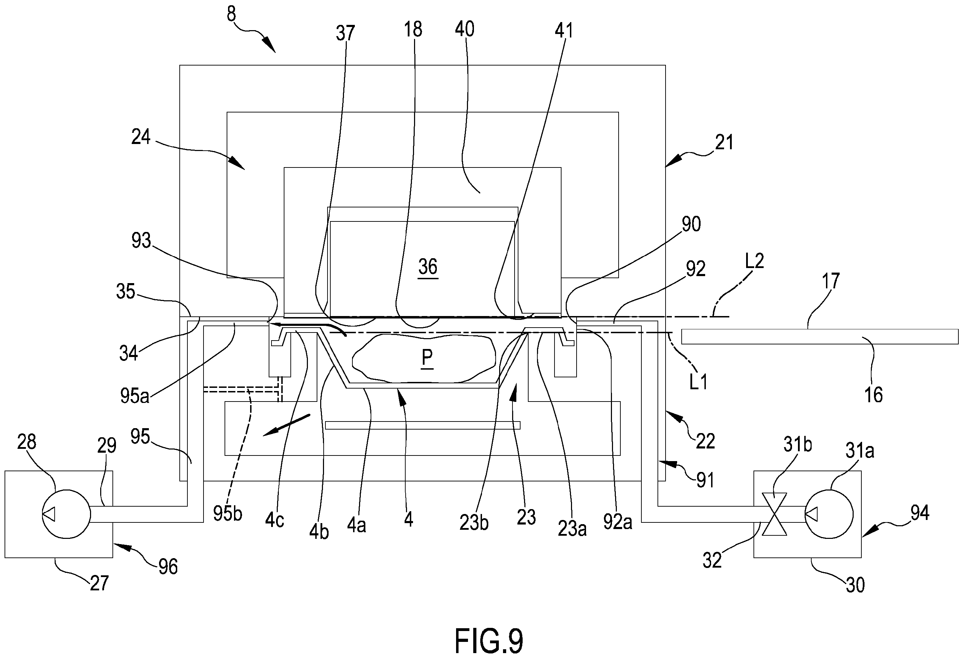

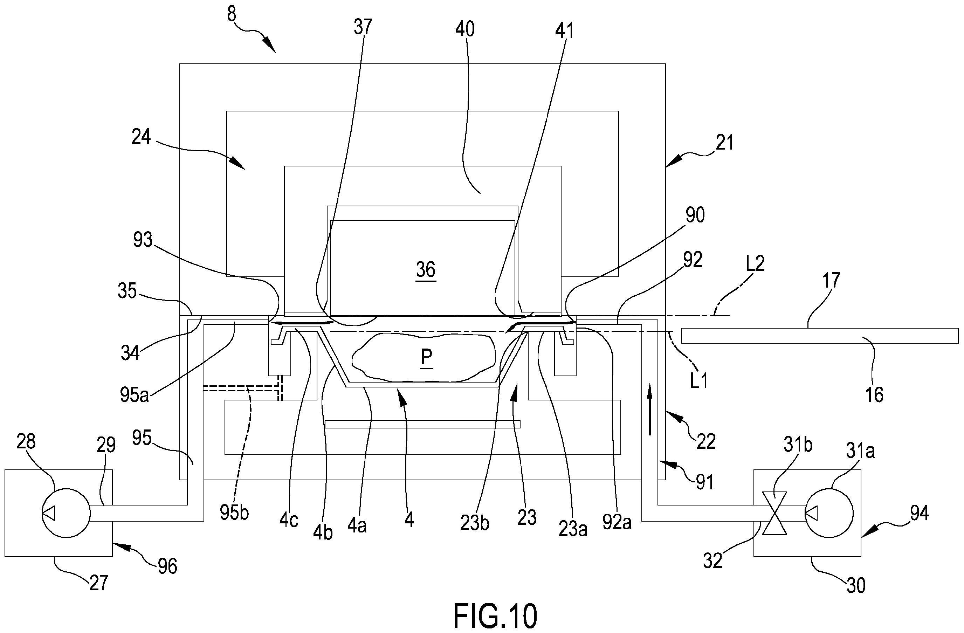

Alternatively, as shown in figures 6 and 7, the control unit 100 may command the tray transport assembly 3 to move the trays inside the packaging assembly 8 only once the holding plate has left the chamber 24. Upon closure of the chamber 24, or immediately thereafter, the gripping member 99 and the gripping surface 103 clamp the corner flaps of the film sheet or sheets 18 hold by film holder 36. In this situation, the film sheet(s) 18 are at a distance from said tray or trays located in the respective seat(s) as shown in figure 8. Then, with the chamber 24 hermetically closed (in the sense that the chamber is closed with respect to an atmosphere external to the apparatus 1 and that the only connections with the chamber are via channels under the apparatus control), the control unit commands controlled evacuation and controlled injection of gas (see figures 9 and 10). In particular the control unit 100 commands the vacuum arrangement 27 to withdraw air (figure 9) and/or the controlled atmosphere arrangement 30 to inject a gas or a gas mixture in the packaging chamber 24 via said first apertures 90, as disclosed herein above (figure 10).

The control unit may be configured for commanding the controlled atmosphere arrangement 30 to inject a stream of gas after each gripping member and corresponding gripping surface have clamped a film peripheral portion, such that the film sheet is securely held in proper position.

Gas is injected via first apertures 90 preferably at adjacent corners of a same seat 23 and evacuated via second apertures at a side of the seat opposite to the first apertures: this allows an efficient filling of the chamber 24 and in particular of the tray with gas having a controlled atmosphere. Moreover, the gas injection via first apertures is made forming streams exiting from the first apertures parallel to the abutment surface 23a and directed to a center zone of each seat: this further improves gas injection without impairing on proper positioning of the film sheet and of the tray.

As shown in figure 11, control unit 100 is also configured for commanding relative movement of the heating surface with respect to the insert or holder 36 and thus cause the heating surface 41 to contact the film sheet and thereby heat and bond to the flange 4c a peripheral portion of the film sheet 18: note that during bonding the flange 4c rests on the abutment surface 23a and therefore the peripheral portion of the film sheet 18 and the flange are trapped and sandwiched between the heating surface 41 and the abutment surface 23a. The relative movement between the heating surface and the bottom surface 37, may be obtained by lowering the heating structure or by raising the insert 36 and typically the upper tool 21.

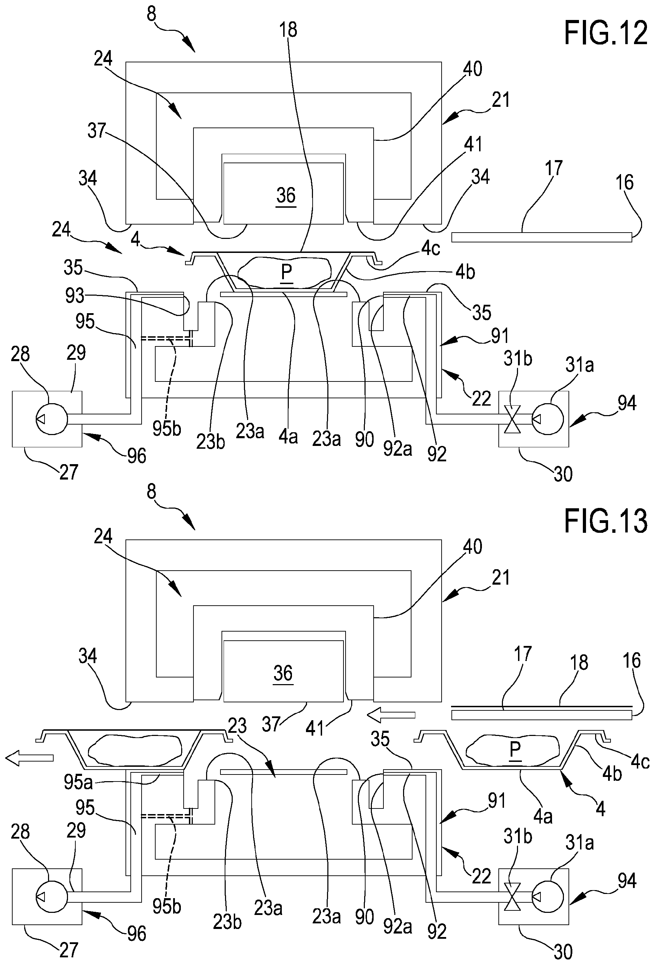

After bonding of the film sheet(s) 18 to the respective tray(s) the control unit 100 commands movement of the packaging assembly back to the first condition and thus opening of the chamber 24 (see figure 12). The apparatus 1 then expels the package from the chamber and the cycle above described restarts (figure 13).

### Second embodiment of apparatus 1

In FIGs. 14-22 a second embodiment of apparatus 1 is shown. For sake of conciseness only the aspects and components of this second embodiment differing from those of the first embodiment will be described. Remaining aspects and components are substantially the same as in the first embodiment and have been identified with same reference numerals.

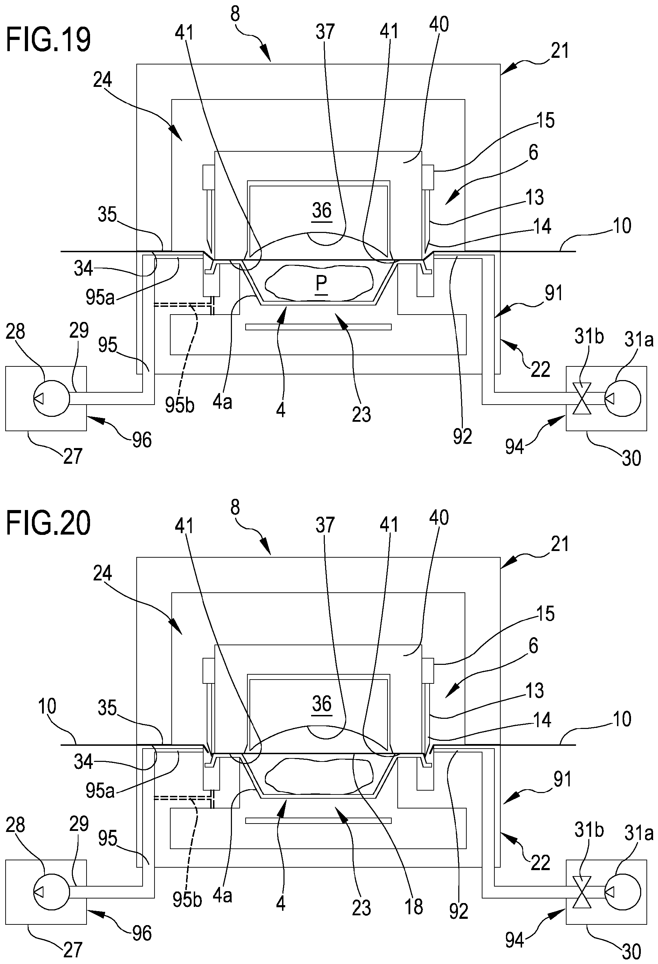

The main difference between the second and the first embodiment is the aspect that in the second embodiment the cutting assembly 6 is located inside the packaging assembly 8 such that the film 10 in the form of a continuous film is moved inside the packaging assembly and sheets 18 are cut directly inside the packaging assembly. As the cutting takes place directly within the packaging assembly or packaging chamber, the film sheets 18 need not be transferred into the packaging assembly or packaging chamber. Thus in the second embodiment there is no need of a component (such as a moving upper tool capable of picking the cut film sheet or a holding plate 16 with transfer device 7) for displacing the cut film sheets from outside the packaging chamber to inside the packaging chamber. Rather the cutting assembly comprises one or more cutting devices 13 with a blade 14 and a blade piston 15 housed in the packaging chamber 24 and carried by the upper tool. This piston 15 may be replaced by any other kind of electric, pneumatic, or hydraulic (linear) actuator. The blade piston 15 is mounted to the upper tool and is connected to the cutting device 13 so as to push and pull it in a direction transverse to the film 10, as indicated by the double arrow A2 shown in FIG. 19 and in FIG.20.

Additionally as the film 10 is not transversally cut before reaching the packaging assembly, the continuous film is driven with a step by step motion synchronized with opening and closing of chamber 24, e.g. by providing upstream roller(s) 12 or downstream roller(s) 112 with a controlled step-by-step motion governed by control unit 100. Of course other means for moving continuous film 10 may be envisaged without departing from the scope of the invention: for instance pincers (not shown) guided along the path of film 10 and acting on the longitudinal sides of the continuous film 10 may be used.

As a further difference the apparatus 1 according to the second embodiment presents an insert 36 with a concave holding surface: note that this feature is only exemplifying a possible solution but of course the insert 36 in the apparatus 1 of the second embodiment may also have a flat bottom surface. It should also be noted that, in general, as the film is continuous there is no need for the insert 36 to act as a film holder as the film is kept in position using holders active on the continuous film from outside the chamber 24. On the other hand, the insert 36 may act as an insulator in order to keep a central portion of the area above each tray at a temperature significantly below that of the heating surface 41.

### Operation of second embodiment

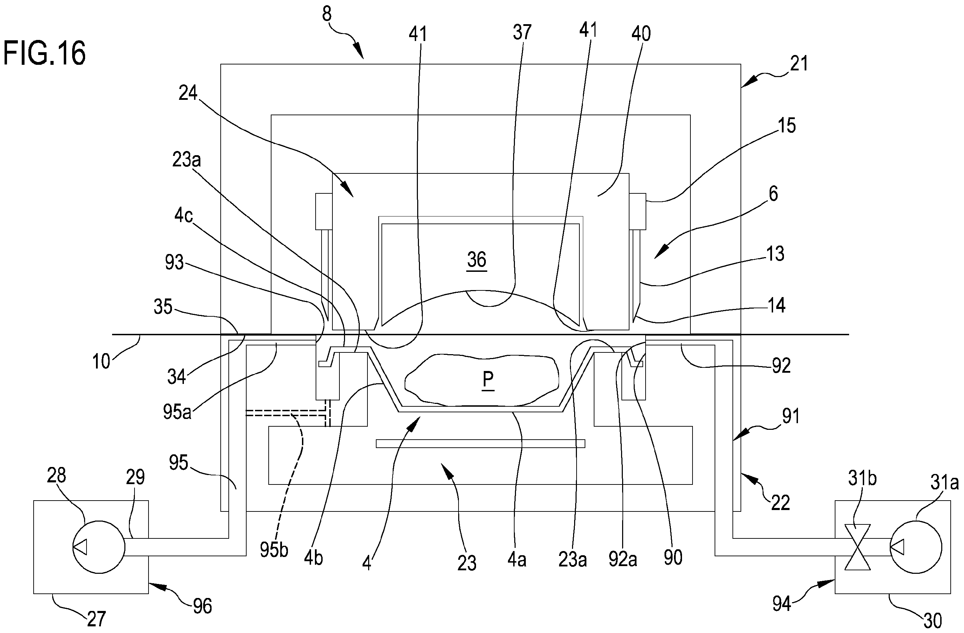

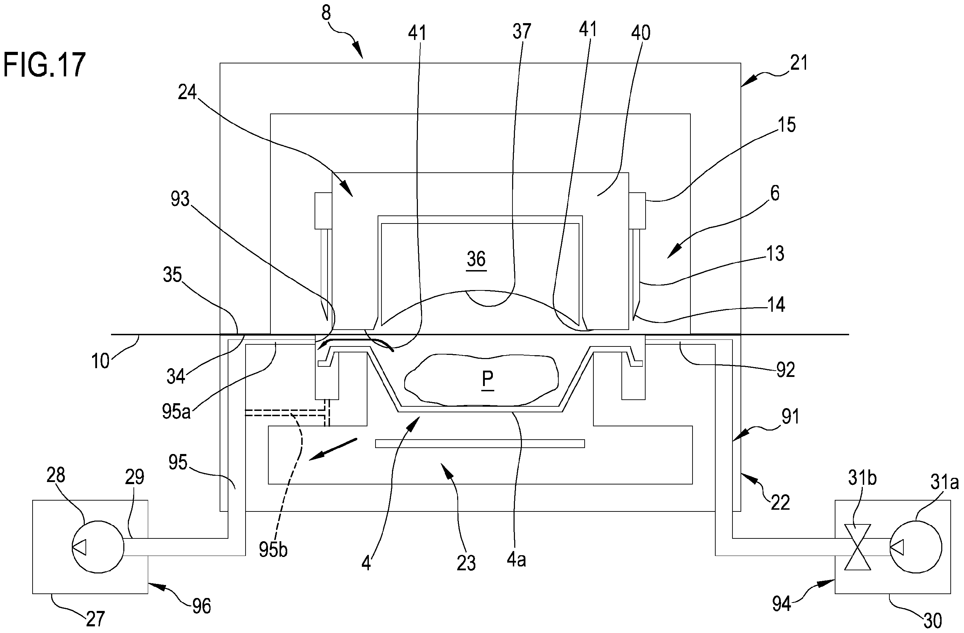

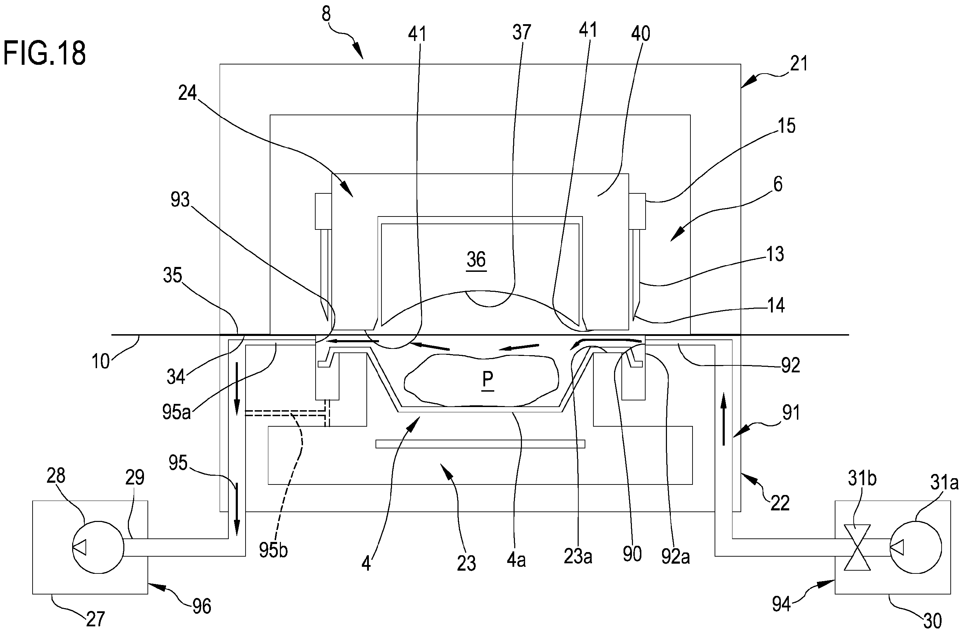

Operation of the apparatus 1 according to the second embodiment is similar to that of first embodiment. Again, it should be noted that the control unit 100 governs the overall packaging process executed by the apparatus 1. In particular the control unit 100 is configured for placing the packaging assembly in the first operating condition. With the chamber 24 open the control unit commands the transport assembly 3 to displace said trays 4 into said packaging chamber 24, and causes transportation of the film into the chamber 24 such that a film portion is positioned above a number of trays 4 (see figures 14 and 15). Optionally, the control unit 100 may command the upper tool 21 insert 36 (if present) to hold the film portion to be fixed to a tray. Then the control unit commands the packaging assembly 8 to pass from the first to the second operating condition (figure 16) and thereby close the chamber 24. Once the chamber 24 is hermetically closed, the control unit may command controlled evacuation of air and injection of gas. In particular the control unit commands the vacuum arrangement 27 to withdraw air from chamber 24 (figure 17) and the controlled atmosphere arrangement 30 to inject a gas or a gas mixture in the packaging chamber 24 via said first apertures 90, as disclosed in herein above (figure 18). The control unit may be configured for commanding the controlled atmosphere arrangement 30 to inject a stream of gas after each gripping member and corresponding gripping surface have clamped a peripheral portion of the film portion to be sealed to the tray, such that this film portion is securely held in proper position.

The control unit 100 is also configured for commanding relative movement of the heating surface 41 with respect to the insert 36 and thus cause the heating surface 41 to contact the film portion of said film to be sealed to the respective tray. Alternatively the insert 36 and the heating structure may be connected in such a way to vertically move together.

During bonding the flange 4c rests on the abutment surface 23a and thus the flange 4c and the portion of the film to be sealed to the flange are trapped and sandwiched between the heating surface 41 and the abutment surface 23a (figure 19). At this point, or slightly before the control unit commands the cutting device 6 and lowers the blade 14 to the film 10 thereby cutting out a film sheet 18 which is already bond to the respective tray (figure 20). Note that what matters is the relative movement of the blade with respect to the film so instead of lowering the blade it is alternatively possibly to vertically raise the lower and upper tools keeping the blade static.

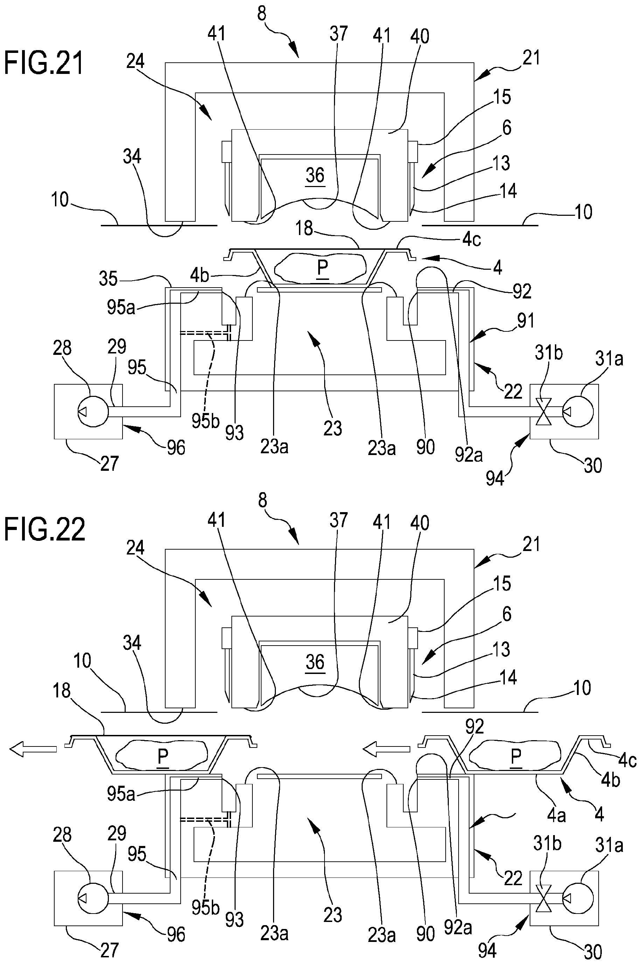

After bonding of the film sheet(s) 18 to the respective tray(s) the control unit 100 commands movement of the packaging assembly back to the first condition and thus opening of the chamber 24 (see figure 21). The apparatus 1 then expels the package from the chamber and the cycle above described restarts (figure 22).

### Control unit

The apparatus 1 according to the invention makes use of at least one control unit as described above. The control unit may comprise a respective digital processor (CPU) with memory (or memories), an analog type circuit, or a combination of one or more digital processing units with one or more analog type circuits. In the above description and in the claims it is indicated that the control unit may be "configured" or "programmed" to execute certain steps: this may be achieved in practice by any means which allow configuring or programming the control unit. For instance, in case of a control unit comprising one or more CPUs and one or more memories, one or more programs may be stored in an appropriate memory banks connected to the CPU or CPUs; the program or programs contain instructions which, when executed by the CPU or CPUs, cause the control unit to execute the steps described or claimed in connection with the control unit. Alternatively, if the control unit is or comprises analog type circuitry, then the circuitry of the control unit may be designed to include circuitry configured, in use, to process electric signals such as to execute the control unit steps herein disclosed or claimed.

### Comparative Tests

As discussed, the invention allowed to achieve precise positioning of trays in the respective seats and of films, with minimal, if at all present, issues of tray dislodgment/misplacement, tray flange bending, film dislodgment or film bending. Moreover, the invention allowed efficient gas injection and gas removal and therefore efficient control of gas composition inside a package during the packaging process.

To show the effectiveness of the process and apparatus of the invention, the applicant has used the packaging apparatus of above embodiment 1 with a lower tool configured with 6 seats capable of housing 6 trays each having 15 cm * 20 cm rectangular flange size and a side wall of 3 cm height. More precisely, a first series of tests (test 1 in below table) has been executed using an apparatus as in embodiment 1, but with ejectors positioned and configured to eject gas from a position below the ideal plane L1. A second series of tests (tests 2 in below table) has then been executed with the apparatus of embodiment 1 having ejectors configured as shown in figure 8 to eject gas from a position fully above ideal plane L1 and with a direction parallel to ideal plane L1. In both cases the gas ejectors were positioned at the corners of the trays. In both series of tests, 6 trays have first been positioned in the respective 6 seats in the lower tool. Respective film sheets or film portions have been positioned above the trays and then the upper tool lowered against the lower tool to form a hermetically sealed packaging chamber. Then vacuum was created until an absolute pressure of 150 mbar was reached in the packaging chamber. At this point a gas composition was injected into the packaging chamber (to create the modified atmosphere) via the mentioned ejectors until a pressure of 980 mbar was reached in the packaging chamber. Finally, the film sheets or film portions were released by the respective film holder and heat sealed by the heating structure to the top flange of the respective tray forming 6 packages of empty trays. Then, the 6 trays were extracted from the packaging chamber and a measure of relative residual concentration of O₂ gas (in mol% = mole percent) was made in each sealed tray by sampling a volume of gas from each sealed tray.

In particular, the relative concentrations in mol % of the gases present in each of the 6 trays for the 7 runs of test 1 with the apparatus of embodiment 1 modified as indicated above, and the relative concentrations in mol % of the gases present in each of the 6 trays for the 5 runs of test 2 with the apparatus of embodiment 1 have been made.

Below table recaps the results of the two series of tests:
- test 1 concerns the case of injection using the apparatus of embodiment 1 modified to have gas ejectors positioned below the level of the tray flange - the test has been executed 7 times (Runs 1 to 7 in below table) and the concentration of residual O₂ (mol %) gas in each of the six trays/seats and for each of the 7 runs has been made;
- test 2 concerns the case of injection with the invention gas ejectors positioned above the level of the tray flange - the test has been executed 5 times (Runs 8 to 12 in below table) and the concentration of residual O₂ gas (mol %) in each of the five trays and for each of the 5 runs has been made.

| **Test 1 : injection coming from below flange** | | | | | | |
|---|---|---|---|---|---|---|
| | | | | | | |

| **Run** | **Seat 1** | **Seat 2** | **Seat 3** | **Seat 4** | **Seat 5** | **Seat 6** |
|---|---|---|---|---|---|---|
| 1 | 0,048 | 0,102 | 0,066 | 0,038 | 0,053 | 0,064 |
| 2 | 0,099 | 0,077 | 0,055 | 0,1 | 0,11 | 0,107 |
| 3 | 0,041 | 0,036 | 0,054 | 0,055 | 0,023 | 0,027 |
| 4 | 0,258 | 0,257 | 0,347 | **1,35** | 0,295 | 0,267 |
| 5 | 0,216 | 0,28 | 0,218 | 0,23 | 0,268 | 0,15 |
| 6 | 0,228 | 0,286 | 0,263 | 0,266 | 0,385 | **1,22** |
| 7 | 0,26 | 0,274 | 0,254 | 0,251 | 0,195 | 0,26 |
| | | | | | | |

| **Test 2: injection over the tray flange according to the invention** | | | | | | |
|---|---|---|---|---|---|---|
| **Run** | **Seat 1** | **Seat 2** | **Seat 3** | **Seat 4** | **Seat 5** | **Seat 6** |
| 9 | 0,014 | 0,019 | 0,02 | 0,008 | 0,012 | 0,011 |
| 10 | 0,012 | 0,019 | 0,018 | 0,017 | 0,014 | 0,068 |
| 11 | 0,024 | 0,018 | 0,019 | 0,009 | 0,009 | 0,1 |
| 12 | 0,014 | 0,019 | 0,018 | 0,037 | 0,018 | 0,246 |

As it is visible from above tables, in test 2 there has be no dislodgment of the trays, while in test 1 tray dislodgment has been experienced at least twice (see seat 4, run 4 and seat 6, run 6 in test 1 where the very high content of oxygen is indicative of tray dislodgment from its proper position); moreover, the invention lead to an appreciably improved oxygen flushing effect compared to injection of test 1.

## Claims

1. An apparatus (1) for packaging a product (P) arranged on a tray (4),
said apparatus (1) comprising a packaging assembly (8) configured for tightly fixing a film (10; 18) to one or more trays (4), the packaging assembly (8) including a prefixed number of seats (23) configured for receiving said one or more trays (4), wherein:
- each of said seats (23) presents a mouth (23b) peripherally delimited by an abutment surface (23a), each of said seats (23) being configured to receive at least one respective tray (4) with a flange (4c) of each tray (4) resting on the abutment surface (23a) of the respective seat (23), and
- the packaging assembly (8) defines - in correspondence of each of said seats (23) - a number of first apertures (90) configured to inject gas towards the inside of the respective seat, wherein each of said first apertures is positioned in correspondence of the mouth (23b) of the respective seat (23) and extends above said abutment surface (23a);
wherein the packaging assembly (8) includes, for each of said seats (23), a number of second apertures (93) located on a side of the seat (23) opposite with respect to the first aperture(s) (90);
wherein the packaging assembly (8) further comprises:
- a lower tool (22) defining the prefixed number of seats (23) and hosting a number of first conduits (91), wherein the first conduits present terminal edges (92) delimiting said first apertures (90) such that each of said first apertures (90) presents at least a major portion extending above the abutment surface (23a) of the respective seat (23);
- an upper tool (21) facing the lower tool (22), at least the upper and lower tools (21; 22) cooperating to define a packaging chamber (24); and
- a control unit (100) connected to the packaging assembly (8) and configured for commanding the packaging assembly (8) to pass from a first operating condition, where said packaging chamber (24) is open to receive the film (10; 18), and a second operating condition, where said packaging chamber (24) is closed, optionally hermetically closed;
wherein the lower tool (22) first conduits (91) have an end, terminating in said terminal edges defining said first apertures (90), and an opposite end, in fluid communication with a gas supply circuit (94);
wherein the lower tool (22) comprises a number of second conduits (95) having an end, terminating in said second apertures (93), and an opposite end, in fluid communication with a gas evacuation circuit (96),
**characterized in that** each of said first apertures (90) is positioned in correspondence of corner regions of the mouth (23b) of the respective seat (23).

2. The apparatus of claim 1, wherein first conduits (91) terminally form ejectors (92) positioned and configured to eject a gas stream tangential and parallel to the abutment surface (23b) and therefore tangential and parallel with respect to a tray flange (4c) resting above the abutment surface (23b) of a seat (23).

3. The apparatus of claim 2, wherein the ejectors (92) entirely extend above and parallel to the abutment surface (23b) and present a fluid passage area with axis parallel to the abutment surface (23b) and therefore tangential and parallel with respect to a tray flange (4c) resting above the abutment surface (23b) of a seat (23).

4. The apparatus of claim 2 or 3, wherein the first apertures (90) are formed by the passage areas delimited by the terminal edges (92a) of said ejectors (92) and lie on a surface generally transverse - optionally perpendicular - to a first ideal plane (L1) passing through the abutment surface (23b); and
wherein the first apertures (90) are located and entirely extend above the abutment surface (23a).

5. The apparatus of any one of the preceding claims, wherein the upper tool (21) comprises an insert (36) acting as film holder having a respective bottom surface (37) configured for holding the film (10; 18) above the respective seats.

6. The apparatus of any one of the preceding claims, wherein each seat (23) has the respective mouth (23b) of polygonal shape and wherein said first apertures (90) include at least one first aperture (90) at a first corner region (23c) of the respective mouth and at least one first aperture (90) at a second corner region (23c) adjacent to the first corner region of the same respective mouth (23b).

7. The apparatus of any one of the preceding claims, wherein each seat (23) has the respective mouth (23b) of rectangular shape and wherein said first apertures (90) include at least one first aperture (90) at a first corner region (23c) of the respective mouth and at least one first aperture (90) at a second corner region (23c) adjacent to the first corner region of the same respective mouth (23b) such that the first apertures are located on a same rectilinear side of the respective mouth.

8. The apparatus of claim 1, wherein the gas supply circuit (94) and the gas evacuation circuit (96) are connected with the control unit (100) which is further configured to:
- command the supply circuit to supply gas having a controlled composition to the first conduits,
- command the evacuation circuit to withdraw gas from the second conduits;
optionally wherein each of said first apertures (90) has the shape of an elongated slit having a width (w) greater than a height (h), wherein the width is measured parallel to an horizontal plane and is at least two times greater than the height, which is measured parallel to a vertical plane, or
wherein said first apertures present at each corner region (23c) a plurality of horizontally aligned, optionally circular, apertures.

9. The apparatus of any one of the preceding claims, wherein the abutment surface (23a) of each seat (23) lies on a first ideal plan (L1) and wherein the upper tool (21) includes insert (36), optionally in the form of a film holder, with the bottom surface (37) of the insert designed to contact the film developing on a second ideal plane (L2) parallel to the first ideal plane (L1), and wherein the terminal edges (92a) of ejectors (92) of the first conduits (91) position the ejectors (92) and first apertures (90) between the first ideal plane and the second ideal plane; optionally wherein the first apertures (90) have a shape elongated in a direction parallel to said first and second ideal planes.

10. The apparatus of any one of the preceding claims, wherein the abutment surface (23a) of each seat (23) extends about the mouth (23b) of the respective seat and forms a corresponding radial band designed for receiving the flange (4c) of each tray, and wherein said first apertures (90) extend in a position which is radially external to an outer perimeter of said radial band,
a peripheral formation (97) protruding above the abutment surface (23a) of each seat (23) and at least partially, preferably totally, surrounding the respective radial band,
said first apertures (90) being defined in correspondence of corner zones (97c) of the peripheral formation, preferably with each first aperture (90) extending above the abutment surface (23a) starting at a distance of at least 1, more preferably 2, mm from the abutment surface.

11. The apparatus of any one of the preceding claims, wherein each seat (23) has a substantially rectangular mouth (23c) defining first and second opposite sides connected by respective corner regions (23c), the first apertures (90) being located at adjacent corner regions (23c) while the second apertures being located in correspondence of one of said sides opposed to the corner regions where the first apertures are located, optionally wherein at each of said adjacent corner regions two or more of said first apertures are provided.

12. The apparatus of any one of the preceding claims, wherein each of said first conduits (91) comprises at least an upwardly extending portion and a connection portion (98) located in correspondence of one corner region (23c) of said seat (23), the terminal connection portion (98) defining an internal channel having a bottom segment (98a) fluidly connected to said upwardly extending portion and a top segment (98b) extending transversally to said upwardly extending portion and forming an ejector (92) terminating into terminal edges (92a) delimiting one or more of said first apertures (90), optionally wherein the area of fluid passage of said top segment progressively increases proceeding towards the one or more first apertures forming a divergent tract; and more optionally wherein the packaging assembly (8) comprises a plurality of said seats (23) the one being adjacently positioned with respect to the other and wherein the connection portion (98) of one of said first conduits (91) is interposed between two corner regions of two adjacent seats (23), the connection portion (98) defining one or more first apertures (90) facing one of the two adjacent seats and one or more first apertures facing the other of said two adjacent seats.

13. A process of packaging a product (P) arranged on a tray (4) using the apparatus (1) according to any one of the preceding claims, the process comprising the following steps:
- moving a film (10; 18) into the packaging chamber (24) of said packaging assembly (8),
- moving a tray (4) into the packaging chamber (24) and below said upper tool (21),
- causing the packaging assembly (8) to pass from the first to the second operating condition, optionally hermetically closing the packaging chamber (24), with the film held above a number of said trays,
- injecting gas through said first apertures (90), optionally injecting a stream of controlled gas configured for creating a modified atmosphere within the packaging chamber (24);
- heat sealing the film sheet (18) to the tray (4).

14. The process of claim 13, wherein the step of injecting gas takes place through first apertures (91) of ejectors (92) and comprises ejecting a gas stream - through said ejectors - tangential and parallel to the abutment surface (23b) of seat (23) and tangential and parallel with respect to a tray flange (4c) resting above said abutment surface (23b) of seat (23) and/or
wherein a plurality of first apertures (90) is located at adjacent corner regions of a same seat mouth, and wherein the injected gas streams are directed parallel to the abutment surface (23a) and towards a center of the respective seat (23) and then to second apertures (93) located on a side opposite the adjacent corners where the first apertures are placed.

15. The process of claim 14, wherein the first apertures (90) are located and entirely extend above the abutment surface (23a) and wherein the step of injecting comprises ejecting a gas stream through said ejectors which flows entirely above the abutment surface (23b) of seat (23) and above a tray flange (4c) resting on abutment surface (23b) of seat (23).

## Patentansprüche

1. Vorrichtung (1) zum Verpacken eines Produktes (P), welches auf einer Schale (4) angeordnet ist,
wobei die Vorrichtung (1) eine Verpackungsanordnung (8) umfasst, welche dazu eingerichtet ist, eine Folie (10; 18) an einer oder mehreren Schalen (4) fest zu fixieren, wobei die Verpackungsanordnung (8) eine vorfixierte Anzahl von Sitzen (23) umfasst, welche dazu eingerichtet sind, die eine oder die mehreren Schalen (4) aufzunehmen, wobei:
- jeder der Sitze (23) einen Mund (23b) aufweist, welcher peripher durch eine Anlagefläche (23a) begrenzt ist, wobei jeder der Sitze (23) dazu eingerichtet ist, wenigstens eine jeweilige Schale (4) aufzunehmen, wobei ein Flansch (4c) jeder Schale (4) an der Anlagefläche (23a) des jeweiligen Sitzes (23) anliegt, und
- die Verpackungsanordnung (8) - in Übereinstimmung zu jedem der Sitze (23) - eine Anzahl erster Öffnungen (90) definiert, welche dazu eingerichtet sind, Gas in Richtung der Innenseite des jeweiligen Sitzes zu injizieren, wobei jede der ersten Öffnungen in Übereinstimmung zu dem Mund (23b) des jeweiligen Sitzes (23) positioniert ist und sich über der Anlagefläche (23a) erstreckt;
wobei die Verpackungsanordnung (8) für jeden der Sitze (23) eine Anzahl zweiter Öffnungen (93) umfasst, welche an einer Seite des Sitzes (23) angeordnet sind, welche entgegengesetzt in Bezug auf die erste/ersten Öffnung/ Öffnungen (90) sind;
wobei die Verpackungsanordnung (8) ferner umfasst:
- ein unteres Werkzeug (22), welches die vorfixierte Anzahl von Sitzen (23) definiert und eine Anzahl erster Leitungen (91) unterbringt, wobei die ersten Leitungen Endränder (92) aufweisen, welche die ersten Öffnungen (90) derart begrenzen, dass jede der ersten Öffnungen (90) wenigstens einen Hauptabschnitt aufweist, welcher sich über der Anlagefläche (23a) des jeweiligen Sitzes (23) erstreckt;
- ein oberes Werkzeug (21), welches dem unteren Werkzeug (22) zugewandt ist, wobei wenigstens das obere und das untere Werkzeug (21; 22) zusammenwirken, um eine Verpackungskammer (24) zu definieren; und
- eine Steuer-/Regeleinheit (100), welche mit der Verpackungsanordnung (8) verbunden ist und dazu eingerichtet ist, der Verpackungsanordnung (8) zu befehlen, von einem ersten Betriebszustand, in welchem die Verpackungskammer (24) geöffnet ist, um die Folie (10; 18) aufzunehmen, und einem zweiten Betriebszustand überzugehen, in welchem die Verpackungsnummer (24) verschlossen, optional hermetisch verschlossen ist;
wobei die ersten Leitungen (91) des unteren Werkzeugs (22) ein Ende, welches in den Endrändern endet, welche die ersten Öffnungen (90) definieren und ein entgegengesetztes Ende aufweisen, welches in Fluidkommunikation mit einem Gaszuführungskreislauf (94) steht;
wobei das untere Werkzeug (22) eine Anzahl zweiter Leitungen (95) umfasst, welche ein Ende, welches in den zweiten Öffnungen (93) endet, und ein entgegengesetztes Ende aufweisen, welches in Fluidkommunikation mit einem Gasabführungskreislauf (96) steht,
**dadurch gekennzeichnet, dass** jede der ersten Öffnungen (90) in Übereinstimmung zu Eckbereichen des Munds (23b) des jeweiligen Sitzes (23) positioniert ist.

2. Vorrichtung nach Anspruch 1, wobei die ersten Leitungen (91) endseitig Ejektoren (92) bilden, welche dazu positioniert und eingerichtet sind, einen Gasstrom tangential und parallel zu der Anlagefläche (23b) und daher tangential und parallel in Bezug auf einen Schalenflansch (4c) auszustoßen, welcher über der Anlagefläche (23b) eines Sitzes (23) anliegt.

3. Vorrichtung nach Anspruch 2, wobei sich die Ejektoren (92) vollständig oberhalb und parallel zu der Anlagefläche (23b) erstrecken und einen Fluiddurchgangsbereich mit einer Achse aufweisen, welche parallel zu der Anlagefläche (23b) und daher tangential und parallel in Bezug auf einen Schalenflansch (4c) ist, welcher über der Anlagefläche (23b) eines Sitzes (23) anliegt.

4. Vorrichtung nach Anspruch 2 oder 3, wobei die ersten Öffnungen (90) durch die Durchgangsbereiche gebildet sind, welche durch die Endränder (92a) der Ejektoren (92) begrenzt sind und auf einer Fläche liegen, welche im Wesentlichen quer - optional lotrecht - zu einer ersten idealen Ebene (L1) ist, welche die Anlagefläche (23b) durchtritt; und wobei die ersten Öffnungen (90) vollständig über der Anlagefläche (23a) angeordnet sind und sich über diese erstrecken.

5. Vorrichtung nach einem der vorhergehenden Ansprüche, wobei das obere Werkzeug (21) einen Einsatz (36) umfasst, welcher als ein Folienhalter wirkt, welcher eine entsprechende Bodenfläche (37) aufweist, welche dazu eingerichtet ist, die Folie (10; 18) über dem jeweiligen Sitzen zu halten.

6. Vorrichtung nach einem der vorhergehenden Ansprüche, wobei jeder Sitz (23) den jeweiligen Mund (23b) polygonaler Form aufweist und wobei die ersten Öffnungen (90) wenigstens eine erste Öffnung (90) an einem ersten Eckbereich (23c) des jeweiligen Munds und wenigstens eine erste Öffnung (90) an einem zweiten Eckbereich (23c) umfassen, welcher benachbart zu dem ersten Eckbereich des gleichen jeweiligen Munds (23b) ist.

7. Vorrichtung nach einem der vorhergehenden Ansprüche, wobei jeder Sitz (23) den jeweiligen Mund (23b) rechteckiger Form aufweist und wobei die ersten Öffnungen (90) wenigstens eine erste Öffnung (90) an einem ersten Eckbereich (23c) des jeweiligen Munds und wenigstens eine erste Öffnung (90) an einem zweiten Eckbereich (23c) umfassen, welcher benachbart zu dem ersten Eckbereich des gleichen jeweiligen Munds (23b) ist, so dass die ersten Öffnungen an einer gleichen geradlinigen Seite des jeweiligen Munds angeordnet sind.

8. Vorrichtung nach Anspruch 1, wobei der Gaszuführungskreislauf (94) und der Gasabführungskreislauf (96) mit der Steuer-/Regeleinheit (100) verbunden sind, welche ferner dazu eingerichtet ist:
- dem Zuführkreislauf zu befehlen, den ersten Leitungen Gas zuzuführen, welches eine gesteuerte/geregelte Zusammensetzung aufweist,
- dem Abführungskreislauf zu befehlen, Gas aus den zweiten Leitungen zu entnehmen;
wobei optional jede der ersten Öffnungen (90) die Form eines länglichen Schlitzes aufweist, welcher eine Breite (w) aufweist, welche größer als eine Höhe (h) ist, wobei die breite parallel zu einer horizontalen Ebene gemessen ist und wenigstens zweimal größer als die Höhe ist, welche parallel zu einer vertikalen Ebene gemessen ist, oder
wobei die ersten Öffnungen, an jedem Eckbereich (23c) eine Mehrzahl horizontal ausgerichteter, optional kreisförmiger, Öffnungen aufweisen.

9. Vorrichtung nach einem der vorhergehenden Ansprüche, wobei die Anlagefläche (23a) jedes Sitzes (23) auf einer ersten idealen Ebene (L1) liegt und wobei das obere Werkzeug (21) einen Einsatz (36), optional in der Form eines Folienhalters, umfasst, wobei die Bodenfläche (37) des Einsatzes dazu ausgelegt ist, die Folie zu berühren, welche sich auf einer zweiten idealen Ebene (L2) entwickelt, welche parallel zu der ersten idealen Ebene (L1) ist und wobei die Endränder (92a) der Ejektoren (92) der ersten Leitungen (91) die Ejektoren (92) und die ersten Öffnungen (90) zwischen der ersten idealen Ebene und der zweiten idealen Ebene positionieren; optional wobei die ersten Öffnungen (90) eine Form aufweisen, welche in einer Richtung verlängert ist, welche parallel zu der ersten und der zweiten idealen Ebene ist.

10. Vorrichtung nach einem der vorhergehenden Ansprüche, wobei die Anlagefläche (23a) jedes Sitzes (23) sich um den Mund (23b) des jeweiligen Sitzes erstreckt und ein entsprechendes radiales Band bildet, welches dazu ausgelegt ist, den Flansch (4c) jeder Schale aufzunehmen, und wobei sich die ersten Öffnungen (90) in einer Position erstrecken, welche sich radial außerhalb zu einem äußeren Umfang des radialen Bandes befindet,
wobei eine periphere Ausbildung (97) über die Anlagefläche (23a) jedes Sitzes (23) vorsteht und das jeweilige radiale Band wenigstens teilweise, vorzugsweise vollständig, umgibt,
wobei die ersten Öffnungen (90) in Übereinstimmung zu Eckzonen (97c) der peripheren Ausbildung definiert sind, wobei sich vorzugsweise jede erste Öffnung (90) über der Anlagefläche (23a) beginnend bei einem Abstand von 1, vorzugsweise 2, mm von der Anlagefläche erstreckt.

11. Vorrichtung nach einem der vorhergehenden Ansprüche, wobei jeder Sitz (23) einen im Wesentlichen rechteckigen Mund (23c) aufweist, welcher erste und zweite entgegengesetzte Seiten definiert, welche durch jeweilige Eckbereiche (23c) verbunden sind, wobei die ersten Öffnungen (90) an benachbarten Eckbereichen (23c) angeordnet sind, während die zweiten Öffnungen in Übereinstimmung zu einer der Seiten angeordnet sind, welche entgegengesetzt zu den Eckbereichen ist, an welchen die ersten Öffnungen angeordnet sind, wobei optional an jedem der benachbarten Eckbereiche zwei oder mehr der ersten Öffnungen vorgesehen sind.

12. Vorrichtung nach einem der vorhergehenden Ansprüche, wobei jede der ersten Leitungen (91) wenigstens einen sich nach oben erstreckenden Abschnitt und einen Verbindungsabschnitt (98) umfasst, welche in Übereinstimmung zu einem Eckbereich (23c) des Sitzes (23) angeordnet sind, wobei der endseitige Verbindungsabschnitt (98) einen inneren Kanal definiert, welcher ein Bodensegment (98a), welches fluidisch mit dem sich nach oben erstreckenden Abschnitt verbunden ist, und ein oberes Segment (98b) aufweist, welches sich quer zu dem sich nach oben erstreckenden Abschnitt erstreckt und einen Ejektor (92) bildet, welcher in Endrändern (92a) endet, welche eine oder mehrere der ersten Öffnungen (90) begrenzen, wobei optional der Bereich eines Fluiddurchgangs des oberen Segments fortschreitend in Richtung der einen oder der mehreren ersten Öffnungen progressiv zunimmt, wobei ein divergenter Trakt gebildet wird; und wobei weiter optional die Verpackungsanordnung (8) eine Mehrzahl der Sitze (23) umfasst, wobei der eine benachbart in Bezug auf den anderen positioniert ist, und wobei der Verbindungsabschnitt (98) einer der ersten Leitungen (91) zwischen zwei Eckbereichen zweier benachbarter Sitze (23) eingefügt ist, wobei der Verbindungsabschnitt (98) eine oder mehrere erste Öffnungen (90), welche einem der beiden benachbarten Sitze zugewandt ist/sind, und eine oder mehrere erste Öffnungen definiert, welche dem anderen der beiden benachbarten Sitze zugewandt ist/sind.

13. Verfahren zur Verpackung eines Produktes (P), welches auf einer Schale (4) angeordnet ist, unter Verwendung der Vorrichtung (1) nach einem der vorhergehenden Ansprüche, wobei das Verfahren die folgenden Schritte umfasst:
- Bewegen einer Folie (10; 18) in die Verpackungskammer (24) der Verpackungsanordnung (8),
- Bewegen einer Schale (4) in die Verpackungskammer (24) und unter das obere Werkzeug (21),
- Veranlassen der Verpackungsanordnung (8), von dem ersten Betriebszustand in den zweiten Betriebszustand überzugehen, wobei optional die Verpackungskammer (24) hermetisch verschlossen wird, wobei die Folie über einer Anzahl von Schalen gehalten wird,
- Injizieren von Gas durch die ersten Öffnungen (90), wobei optional ein Strom von gesteuertem/geregeltem Gas injiziert wird, welches dazu eingerichtet ist, eine modifizierte Atmosphäre innerhalb der Verpackungskammer (24) zu erzeugen;
- Wärmeverschweißen der Folienbahn (18) mit der Schale (4).

14. Verfahren nach Anspruch 13, wobei der Schritt des Injizierens von Gas durch erste Öffnungen (91) von Ejektoren (92) stattfindet und ein Ausstoßen eines Gasstroms
- durch die Ejektoren - tangential und parallel zu der Anlagefläche (23b) eines Sitzes (23) und tangential und parallel in Bezug auf einen Schalenflansch (4c) umfasst, welcher über der Anlagefläche (23b) des Sitzes (23) anliegt und/oder wobei eine Mehrzahl erster Öffnungen (90) an benachbarten Eckbereichen eines gleichen Sitzmundes angeordnet ist, und wobei die injizierten Gasströme parallel zu der Anlagefläche (23a) und in Richtung einer Mitte des jeweiligen Sitzes (23) und dann zu zweiten Öffnungen (93) gerichtet werden, welche an einer Seite angeordnet sind, welche entgegengesetzt zu den benachbarten Ecken ist, an welchen die ersten Öffnungen angeordnet sind.

15. Verfahren nach Anspruch 14, wobei die ersten Öffnungen (90) über der Anlagefläche (23a) angeordnet sind und sich vollständig über dieser erstrecken und wobei der Schritt des Injizierens ein Ausstoßen eines Gasstroms durch die Ejektoren umfasst, welcher vollständig über die Anlagefläche (23b) des Sitzes (23) und über einen Schalenflansch (4c) strömt, welcher an der Anlagefläche (23b) des Sitzes (23) anliegt.

## Revendications

1. Appareil (1) d'emballage d'un produit (P) disposé sur une barquette (4),
ledit appareil (1) comprenant un ensemble emballage (8) configuré pour fixer fermement un film (10; 18) à une ou plusieurs barquettes (4), l'ensemble emballage (8) comprenant un nombre prédéfini d'assises (23) configurées pour recevoir lesdites barquettes (4), où :
- chacune desdites assises (23) présente une bouche (23b) délimitée dans la périphérie par une surface de butée (23a), chacune desdites assises (23) étant configurée pour recevoir au moins une barquette respective (4) avec une collerette (4c) de chaque barquette (4) reposant sur la surface de butée (23a) de l'assise respective (23), et
- l'ensemble emballage (8) définit - en correspondance de chacune desdites assises (23) - un nombre de premières ouvertures (90) configurées pour injecter du gaz vers l'intérieur de l'assise respective, où chacune desdites premières ouvertures est positionnée en correspondance de la bouche (23b) de l'assise respective (23) et s'étend au-dessus de ladite surface de butée (23a) ;
où l'ensemble emballage (8) comprend, pour chacune desdites assises (23), un nombre de secondes ouvertures (93) localisées sur un côté de l'assise (23) opposées par rapport à la(aux) première(s) ouverture(s) (90) ;
où l'ensemble emballage (8) comprend en outre :
- un outil inférieur (22) définissant le nombre prédéfini d'assises (23) et logeant de nombreux premiers conduits (91), où les premiers conduits présentent des bords terminaux (92) délimitant lesdites premières ouvertures (90) de sorte que chacune desdites premières ouvertures (90) présente au moins une partie majeure s'étendant au-dessus de la surface de butée (23a) de l'assise respective (23) ;
- un outil supérieur (21) faisant face à l'outil inférieur (22), au moins les outils supérieur et inférieur (21 ; 22) coopérant pour définir une chambre d'emballage (24) ; et
- une unité de commande (100) reliée à l'ensemble emballage (8) et configurée pour commander à l'ensemble emballage (8) de passer depuis un premier état de fonctionnement, où ladite chambre d'emballage (24) est ouverte pour recevoir le film (10; 18), et un second état de fonctionnement, où ladite chambre d'emballage (24) est fermée, éventuellement hermétiquement fermée ;
où les premiers conduits (91) de l'outil inférieur (22) présentent une extrémité, se terminant dans lesdits bords terminaux définissant lesdites premières ouvertures (90), et une extrémité opposée, en communication fluidique avec un circuit d'alimentation de gaz (94) ;
où l'outil inférieur (22) comprend de nombreux seconds conduits (95) présentant une extrémité, se terminant dans lesdites secondes ouvertures (93), et une extrémité opposée, en communication fluidique avec un circuit d'évacuation de gaz (96),
**caractérisé en ce que** chacune desdites premières ouvertures (90) est positionnée en correspondance de régions en coin de la bouche (23b) de l'assise respective (23).

2. Appareil selon la revendication 1, dans lequel les premiers conduits (91) forment au plan terminal des éjecteurs (92) positionnés et configurés pour éjecter un écoulement de gaz tangentiel et parallèle à la surface de butée (23b) et par conséquent tangentiel et parallèle par rapport à une collerette de barquette (4c) reposant au-dessus de la surface de butée (23b) d'une assise (23).

3. Appareil selon la revendication 2, dans lequel les éjecteurs (92) s'étendent entièrement au-dessus et parallèles à la surface de butée (23b) et présentent une zone de passage de liquide avec l'axe parallèle à la surface de butée (23b) et par conséquent tangentiel et parallèle par rapport à une collerette de barquette (4c) reposant au-dessus de la surface de butée (23b) d'une assise (23).

4. Appareil selon la revendication 2 ou 3, dans lequel les premières ouvertures (90) sont formées par les zones de passage délimitées par les bords terminaux (92a) desdits éjecteurs (92) et reposent sur une surface généralement transversale - éventuellement perpendiculaire - à un premier plan idéal (L1) passant à travers la surface de butée (23b) ; et
où les premières ouvertures (90) sont localisées et s'étendent entièrement au-dessus de la surface de butée (23a).

5. Appareil selon l'une quelconque des revendications précédentes, dans lequel l'outil supérieur (21) comprend un insert (36) agissant comme dispositif de maintien de film ayant une surface inférieure respective (37) configurée pour maintenir le film (10 ; 18) au-dessus des assises respectives.

6. Appareil selon l'une quelconque des revendications précédentes, dans lequel chaque assise (23) présente la bouche respective (23b) de forme polygonale et où lesdites premières ouvertures (90) comprennent au moins une première ouverture (90) au niveau d'une première région en coin (23c) de la bouche respective et au moins une première ouverture (90) au niveau d'une seconde région en coin (23c) adjacente à la première région en coin de la même bouche respective (23b).

7. Appareil selon l'une quelconque des revendications précédentes, dans lequel chaque assise (23) présente la bouche respective (23b) de forme rectangulaire et où lesdites premières ouvertures (90) comprennent au moins une première ouverture (90) au niveau d'une première région en coin (23c) de la bouche respective et au moins une première ouverture (90) au niveau d'une seconde région en coin (23c) adjacente à la première région en coin de la même bouche respective (23b) de sorte que les premières ouvertures sont localisées sur un même côté rectiligne de la bouche respective.

8. Appareil selon la revendication 1, dans lequel le circuit d'alimentation de gaz (94) et le circuit d'évacuation de gaz (96) sont reliés à l'unité de commande (100) qui est en outre configurée pour :
- commander au circuit d'alimentation d'alimenter du gaz ayant une composition contrôlée aux premiers conduits,
- commander au circuit d'évacuation d'extraire le gaz des seconds conduits ;
éventuellement où chacune desdites premières ouvertures (90) présente la forme d'une fente allongée ayant une largeur (w) supérieure à une hauteur (h), où la largeur est mesurée parallèle à un plan horizontal et est au moins deux fois supérieure à la hauteur, qui est mesurée parallèle à un plan vertical, ou
où lesdites premières ouvertures présentent au niveau de chaque région en coin (23c) une pluralité d'ouvertures horizontalement alignées, éventuellement circulaires.

9. Appareil selon l'une quelconque des revendications précédentes, où la surface de butée (23a) de chaque assise (23) repose sur un premier plan idéal (L1) et où l'outil supérieur (21) comprend l'insert (36), éventuellement sous la forme d'un dispositif de maintien de film, avec la surface inférieure (37) de l'insert conçue pour contacter le film se développant sur un second plan idéal (L2) parallèle au premier plan idéal (L1), et où les bords terminaux (92a) des éjecteurs (92) des premiers conduits (91) positionnent les éjecteurs (92) et les premières ouvertures (90) entre le premier plan idéal et le second plan idéal ; éventuellement où les premières ouvertures (90) présentent une forme allongée dans un sens parallèle auxdits premier et second plan idéal.

10. Appareil selon l'une quelconque des revendications précédentes, où la surface de butée (23a) de chaque assise (23) s'étend autour de la bouche (23b) de l'assise respective et forme une bande radiale correspondante conçue pour recevoir la collerette (4c) de chaque barquette, et où lesdites premières ouvertures (90) s'étendent dans une position qui est radialement externe à un périmètre externe de ladite bande radiale,
une formation périphérique (97) faisant saillie au-dessus de la surface de butée (23a) de chaque assise (23) et entourant au moins partiellement, préférablement totalement, la bande radiale respective,
lesdites premières ouvertures (90) étant définies en correspondance des zones en coin (97c) de la formation périphérique, préférablement avec chaque première ouverture (90) s'étendant au-dessus de la surface de butée (23a) commençant à une distance d'au moins 1, plus préférablement 2, mm de la surface de butée.

11. Appareil selon l'une quelconque des revendications précédentes, dans lequel chaque assise (23) présente une bouche sensiblement rectangulaire (23c) définissant un premier et un second côté opposés reliés par des régions respectives en coin (23c), les premières ouvertures (90) étant localisées à des régions adjacentes en coin (23c) tandis que les secondes ouvertures sont localisées en correspondance de l'un desdits côtés opposés aux régions en coin où les premières ouvertures sont localisées, éventuellement où au niveau de chacune desdites régions adjacentes en coin deux ou plusieurs desdites premières ouvertures sont prévues.

12. Appareil selon l'une quelconque des revendications précédentes, dans lequel chacun desdits premiers conduits (91) comprend au moins une partie s'étendant vers le haut et une partie de connexion (98) localisée en correspondance d'une région en coin (23c) de ladite assise (23), la partie de connexion terminale (98) définissant un canal interne ayant un segment inférieur (98a) relié de manière fluidique à ladite partie s'étendant vers le haut et un segment supérieur (98b) s'étendant transversalement vers ladite partie s'étendant vers le haut et formant un éjecteur (92) se terminant en bords terminaux (92a) délimitant une ou plusieurs desdites premières ouvertures (90), éventuellement où la zone de passage de fluide dudit segment supérieur augmente progressivement en avançant vers lesdites premières ouvertures formant un tractus divergent ; et plus facultativement où l'ensemble emballage (8) comprend une pluralité desdites assises (23) celles positionnées de manière adjacente par rapport à l'autre et où la partie de connexion (98) de l'un desdits premiers conduits (91) est interposée entre deux régions en coin de deux assises adjacentes (23), la partie de connexion (98) définissant une ou plusieurs premières ouvertures (90) faisant face à l'une des deux assises adjacentes et une ou plusieurs premières ouvertures faisant face à l'autre desdites deux assises adjacentes.

13. Procédé d'emballage d'un produit (P) disposé sur une barquette (4) utilisant l'appareil (1) selon l'une quelconque des revendications précédentes, le procédé comprenant les étapes suivantes :
- le déplacement d'un film (10 ; 18) dans la chambre d'emballage (24) dudit ensemble emballage (8),
- le déplacement d'une barquette (4) dans la chambre d'emballage (24) et en-dessous dudit outil supérieur (21),
- le fait d'amener l'ensemble emballage (8) à passer depuis la première vers le second état de fonctionnement, éventuellement fermant hermétiquement la chambre d'emballage (24), avec le film maintenu au-dessus de plusieurs desdites barquettes,
- l'injection de gaz à travers lesdites premières ouvertures (90), éventuellement l'injection d'un écoulement de gaz contrôlé configuré pour créer une atmosphère modifiée à l'intérieur de la chambre d'emballage (24) ;
- le thermoscellage de la feuille sous forme de film (18) à la barquette (4).

14. Procédé selon la revendication 13, où l'étape d'injection de gaz a lieu à travers les premières ouvertures (91) des éjecteurs (92) et comprend l'éjection d'un écoulement de gaz - à travers lesdits éjecteurs - de manière tangentielle et parallèle à la surface de butée (23b) de l'assise (23) et tangentielle et parallèle à une collerette de barquette (4c) reposant au-dessus de ladite surface de butée (23b) de l'assise (23) et/ou
une pluralité de premières ouvertures (90) étant localisée à des régions adjacentes en coin d'une même bouche d'assise, et où les écoulements de gaz injectés sont dirigés parallèles à la surface de butée (23a) et vers un centre de l'assise respective (23) et ensuite vers les secondes ouvertures (93) localisées sur un côté opposé aux coins adjacents où les premières ouvertures sont placées.

15. Procédé selon la revendication 14, dans lequel les premières ouvertures (90) sont localisées et s'étendent entièrement au-dessus de la surface de butée (23a) et où l'étape d'injection comprend l'éjection d'un écoulement de gaz à travers lesdits éjecteurs qui s'écoule entièrement au-dessus de la surface de butée (23b) de l'assise (23) et au-dessus d'une collerette de barquette (4c) reposant sur la surface de butée (23b) de l'assise (23).
